# EUROPÄISCHE PATENTSCHRIFT

(11) **EP 2 254 926 B1**
(45) Veröffentlichungstag und Bekanntmachung des Hinweises auf die Patenterteilung: **11.07.2012**
(21) Anmeldenummer: 09711738.6
(22) Anmeldetag: 09.01.2009
(51) Int. Cl.: C08G 18/28, C08G 18/32, C08G 18/38, C08G 18/48, C08G 18/79, C08G 18/67, C08G 18/80, B01F 17/00, C09B 67/00

(54) **NETZ- UND DISPERGIERMITTEL, DEREN HERSTELLUNG UND VERWENDUNG**
HUMECTANT AND DISPERSANT, PRODUCTION AND USE THEREOF
AGENTS DISPERSANTS ET MOUILLANTS, LEUR FABRICATION ET LEUR UTILISATION

(30) Priorität: 22.02.2008 DE 102008010687
(43) Veröffentlichungstag der Anmeldung: 01.12.2010
(73) Patentinhaber: BYK-Chemie GmbH, 46483 Wesel (DE)
(72) Erfinder: PRITSCHINS, Wolfgang, 46487 Wesel (DE); HAUBENNESTEL, Karlheinz, 46487 Wesel (DE); TEUWSEN, Hans-Josef, 47589 Uedem (DE)
(74) Vertreter: Leifert & Steffan
(86) Internationale Anmeldenummer: PCT/EP2009/000074
(87) Internationale Veröffentlichungsnummer: WO 2009/103381

(56) Entgegenhaltungen:
- EP-A- 1 496 073
- EP-A- 1 837 355
- EP-B- 1 068 254

## Beschreibung

Die vorliegende Erfindung betrifft als Netzmittel, Dispergiermittel und als Dispersionsstabilisatoren geeignete Additionsverbindungen und deren Salze. Die Erfindung betrifft weiterhin Verfahren zur Herstellung dieser Additionsverbindungen, deren Verwendung als Netz- und Dispergiermittel und Dispersionsstabilisatoren für organische und anorganische Pigmente sowie Füllstoffe in organischen und wässrigen Systemen und in flüssige Systeme einarbeitbare pulver- oder faserförmige Feststoffe, die mit solchen Netzmitteln und Dispergiermitteln beschichtet sind.

Netzmittel setzen in einer Flüssigkeit gelöst oder dispergiert die Oberflächenspannung beziehungsweise Grenzflächenspannung herab und vergrößern so das Netzvermögen der Lösung. Dispergiermittel eignen sich im Allgemeinen zur Stabilisierung von Feststoffteilchen in Bindemitteln, Lacken, Pigmentpasten, Kunststoffen und Kunststoffmischungen, zur Reduktion der Viskosität solcher Systeme sowie zur Verbesserung der Fließeigenschaften. Dispersionsstabilisatoren eignen sich im Allgemeinen zur Stabilisierung bereits erzeugter Dispersionen.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Bei solchen Dispergiermitteln handelt es sich um oberflächenaktive Stoffe, anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, dass es auch nach vollständiger Deflockulierung der Feststoffagglomerate in Primärteilchen, nach dem Dispergierprozess zu Reagglomerationen kommen kann, wodurch der Dispergieraufwand teilweise oder vollständig zunichte gemacht wird. Als Folge der unzulänglichen Dispergierung bzw. durch Reagglomeration kommt es zu unerwünschten Effekten wie einem Viskositätsanstieg in flüssigen Systemen, einer Farbtondrift und einem Glanzverlust in Lacken und Beschichtungen sowie einer Verringerung der mechanischen Festigkeit in Kunststoffen.

Eine Vielzahl verschiedener Substanzen wird heute als Dispergiermittel für Pigmente und Füllstoffe verwendet. Neben einfachen, niedermolekularen Verbindungen wie beispielsweise Lecithin, Fettsäuren und deren Salzen und Alkylphenolethoxylaten werden auch komplexe Strukturen als Dispergiermittel eingesetzt. Hier sind es speziell amino- und amidfunktionelle Systeme, die breite Verwendung innerhalb der Dispergiermittel finden. In EP 158 406 und EP 208 041 werden beispielsweise amino- und amidfunktionelle Poly- und Oligocopolymere auf der Basis von Polyaminen und Polycaprolactonen zur Dispergierung von Pigmenten eingesetzt, bei denen alle reaktiven Aminogruppen in Amidgruppen umgewandelt sind. Diese Produkte stellen aber komplexe und schlecht reproduzierbare Reaktionsgemische dar und weisen sehr schlechte Löslichkeiten in Lösemitteln und unzulängliche Verträglichkeiten mit Bindemitteln und anderen Harzen auf.

Gute Ergebnisse lassen sich bereits mit polymeren Dispergiermitteln auf der Basis von Polyisocyanaten erzielen, wie sie beispielsweise in der EP 0 154 678, der EP 0 318 999 und der EP 0 438 836 beschrieben sind. Diese Produkte werden durch Addition von Monohydroxyverbindungen, diisocyantfunktionellen Verbindungen und Verbindungen mit einer tertiären Aminogruppe an die vorliegenden NCO-Gruppen von Isocyanurat-, Biuret-, Urethan- und/oder Allophanatgruppen aufweisenden Polyisocyanaten hergestellt.

Die oben vorgestellten Dispergiermittel stellen jedoch oft nur Teillösungen für diese Probleme dar. Aufgrund der Vielzahl der heute verwendeten anorganischen und organischen Pigmente und Füllmaterialien ist eine hinreichende Stabilisierung der zu dispergierenden Feststoffteilchen durch desorptionsstabile Belegung der Oberfläche nicht ausreichend gewährleistet. Somit kommt es zu Agglomerationen, da die notwendige effiziente sterische Abschirmung fehlt.

Aufgrund der hohen Einsatzmengen derartiger Dispergiermittel bezogen auf die zu dispergierenden Feststoffe (bei Ruß bis zu 100% Dispergiermittel bezogen auf Pigment), kommt es in der fertigen Lackschicht häufig zu Verschlechterungen bei der Zwischenschichthaftung und den Beständigkeiten, insbesondere Wasserfestigkeit, Lösemittelbeständigkeit und Kratzfestigkeit.

In EP 1 068 254 B1 wird die Imprägnierung von Baumwolle oder Mischgeweben aus Polyester/Baumwolle mit einem Gemisch aus Pyrazol-geblockten oligomeren Isocyanaten, fluorcarbonhaltigen Copolymeren und Essigsäure beschrieben. In EP 1 496 073 A1 wird die Behandlung von textilen Geweben mit einer wässrigen Dispersion zur Ausrüstung mit öl- und wasserabwelsenden Eigenschaften beschrieben. Die wässrigen Dispersionen enthalten neben Fluorpolymeren Umsetzungsprodukte von mehrwertigen Isocyanaten mit längerkettigen einwertigen Alkohlen, einem Ketonoxim und mehrwertigen Alkoholen oder Aminoalkoholen.

Der vorliegenden Erfindung liegt daher die Aufgabe zugrunde, die zuvor beschriebenen Nachteile bekannter Dispergiermittel zu beseitigen, das heißt Additive zu entwickeln, die bei guter Stabilisierung von Pigmenten oder Füllstoffen die Mahlgutviskosität der Lacke, Pasten oder Kunststoffformulierungen so weit senken, dass eine Verarbeitung bei hohem Füllgrad möglich ist, ohne dass die Beständigkeiten der ausgehärteten Lacke negativ beeinflusst werden. Gleichzeitig muss speziell bei Pigment- und Füllstoffpasten eine breite Verträglichkeit gewährleistet sein, um diese in vielen unterschiedlichen Bindemitteln und Überzugsmaterialien einsetzen zu können. Weiterhin ist es erforderlich, dass die verwendeten erfindungsgemäßen Dispergieradditive eine flockulationsfreie Mischbarkeit der Pasten, beziehungsweise der mit diesen Pasten hergestellten Bindemittel, untereinander ermöglichen.

Weiterhin sollen Dispergieradditive bereitgestellt werden, die auch als Netzmittel wirken. Schließlich sollen die bereitgestellten Additive auch als Dispersionsstabilisatoren, insbesondere als Emulsionsstabilisatoren wirken.

Überraschenderweise hat es sich gezeigt, dass eine deutliche Verbesserung in den Beständigkeiten bei guter Dispergierung und Stabilisierung der Pigmente oder Füllstoffteilchen in Bindemitteln, Pigmentpasten oder Kunststoffformulierungen erreicht werden kann, wenn die nachfolgend beschriebenen erfindungsgemäßen Additionsverbindungen eingesetzt werden.

Weiterhin sind diese Additionsverbindungen überraschend breit verträglich und können als Dispergiermittel und/oder Dispersionsstabilisatoren sowohl in polaren wie auch in unpolaren Bindemittelsystemen eingesetzt werden. Sie senken die Viskosität des Mahlgutes während der Dispergierung stark und erlauben es daher Formulierungen mit hohem Feststoffanteil herzustellen. Weiterhin sind die erfindungsgemäßen Additionsverbindungen gute Netzmittel.

Die Lösung der Aufgabenstellung wird erreicht durch die Bereitstellung von Additionsverbindungen und deren Salze, welche erhältlich sind durch die Umsetzung von
(a) einem oder mehreren Polyisocyanaten mit mindestens zwei Isocyanat-Gruppen pro Molekül mit
(b) einer oder mehreren Verbindungen der Formel (I)

   Y-(XH)ₙ (I)

   wobei
   XH für eine gegenüber Isocyanaten reaktive Gruppe steht und
   Y für eine nicht gegenüber Isocyanaten reaktive, monomere oder polymere Gruppe steht, die keine tertiären Aminogruppen und keine hydrolysierbaren Silangruppen enthält, und die eine oder mehrere aliphatische, cycloaliphatische und/oder aromatische Gruppen umfasst, und wobei
   n für 1, 2 oder 3 steht,
      wobei die Verbindung der Formel (I) eine zahlenmittlere Molmasse Mₙ kleiner 20000 g/mol besitzt und keine Verbindung darstellt, die unter die Definition der Komponente (c2) fällt,
      und
      wobei für mindestens 50 Mol-% der Verbindungen der Formel (I) gilt, dass n = 1 ist,
      unter der Vorgabe, dass 20 % bis 90% der Isocyanatgruppen der Komponente (a) mit den Verbindungen der Formel (I) umgesetzt werden,
      und
(c) einer oder mehreren Verbindungen aus der Gruppe
   (c1) Verbindungen nach Formel (II)

      M-Q (II)

      worin
      M einen organischen Rest mit einer zahlenmittleren Molmasse von maximal 1000 g/mol darstellt, welcher
      i) mindestens eine tertiären Aminogruppe und mindestens eine Hydroxylgruppe
         oder
      ii) mindestens eine hydrolisierbare Silangruppe unter der Maßgabe enthält, dass für 100 % der Verbindung der allgemeinen Formel (I) n =1 gi*lt und
      Q für NH₂, OH oder NHR steht, worin R für eine lineare oder verzweigte Alkylgruppe mit 1 bis 18 Kohlenstoffatomen steht,
   (c2) einem Biockierungsmittel für Isocyanatgruppen ausgewählt aus der Gruppe bestehend aus Lactamen, Malonestern, Alkyacetoacetaten, Phenolen, Diisopropylamin, 1,2,4-Trizol und Imidazol, und
   (c3) optional Verbindungen der allgemeinen Formel (III)

      Z-Q (III)
   worin
   Z für einen organischen basischen Rest mit mindestens einer tertiären Aminogruppe steht, der keine NCO-reakdven Gruppen enthält, und
   Q für NH₂, OH oder NHR steht, worin R für eine lineare oder verzweigte Alkylgruppe mit 1 bis 18 Kohlenstoffatomen steht,
   wobei im Reaktionsprodukt aus (a), (b) und (c) gegebenenfalls vorliegende Hydroxylgruppen gegebenenfalls mit Polycarbonsäuren mit mindestens zwei Carboxylgruppen oder deren Anhydriden In einer solchen Menge umgesetzt werden, dass auf jede umzusetzende Hydroxylgruppe mindestens. 0,8 Moleküle der Polycarbonsäure oder des Potycarbonsiureanhydrids eingesetzt wenden:
   unter der Maßgabe, dass mindestens 10 %, bevorzugt 20%, besonders bevorzugt 40% der Isocyanatgruppen der Komponente (a) mit Komponente (c) umgesatzt werden und als Komponente (c) mindestens 5 mol% einer oder mehrere der Komponenten (c1) und/oder (c2) eingesetzt werden und dass 0 bis 50 % vorzugsweise 0 bis 35 %, besonders bevorzugt 0% der Isocyenatgruppen der Komponente (a) mit einer oder mehreren Komponenten (c3) umgesetzt werden.

### Komponente (a)

Für die Herstellung der erfindungsgemäßen Additionsverbindungen werden als Komponente (a) Polylsocyanate mit mindestens zwei Isocyanatgruppen pro Molekül eingesetzt. Derartige Isocyanate sind auf dem vorliegenden technischen Gebiet aus dem Stand der Technik bekannt.

Es handelt sich dabei besonders bevorzugt um Biuret-, Urethan-, Uretdion- und/oder Isocyanuratgruppen aufweisende oligomere oder polymere Derivate von monomeren Diisocyanaten. Derartige monomere Diisocyanate sind zum Beispiel 1,4-Düsocyanatobutan, Hexamethylendiisocyanat (HDI), 2-Methyl-1,5-diisocyanatopentan, 1,5-Diisocyanato-2,2-dimethylpentan, 2,2,4- oder 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethyl-cyclohexan (Isophorondiisocyanat, IPDI), 4,4'-Diisocyanatodicyclohexylmethan, Toluylendiisocyanat (TDI), 1-Isocyanato-1-methyl-4(3)isocyanatomethylcyclohexan, Bis-(isocyanatomethyl)-norbornan und 1,3- und 1,4-Bis-(2-isocyanato-prop-2-yl)-benzol (TMXDI) oder Mischungen solcher Diisocyanate. Die genannten monomeren Isocyanate können jedoch auch als solche alleine oder in Mischung oder in Mischung mit deren Biuret-, Urethan-, Uretdion- und/oder Isocyanuratgruppen aufweisenden oligomeren oder polymeren Derivaten eingesetzt werden. Erfindungsgemäß können ein oder mehrere monomere, oligomere oder polymere Polyisocyanate verwendet werden.

Die Polyisocyanate müssen eine mittlere Funktionalität von mindestens 2 besitzen. Vorzugsweise beträgt die mittlere Funktionalität mindestens 2,5 und besonders bevorzugt mindestens 3. Besonders bevorzugt werden die oben beschriebenen Derivate von HDI, TDI und/oder IPDI und insbesondere solche des TDI.

Beispiele für derartige Polyisocyanate sind solche, die beispielsweise durch Addition von Diisocyanaten an Polyole erhalten werden können wie Desmodur L der Firma Bayer oder die durch Biuretreaktion aus Diisocyanaten erhalten werden können wie das Handelsprodukt: Desmodur N der Firma Bayer oder aber die durch Cyclisierung von Diisocyanaten erhältlichen Polyisocyanate mit Isocyanurat Grundstruktur wie die Handelsprodukte Desmodur HL und Desmodur IL der Firma Bayer, die Handelsprodukte Polurene KC oder Polurene HR der Firma SAPICI, oder trimeres Isophorondiisocyanat (Isocyanurat T1890 der Firma Chemische Werke Hüls). Weitere Beispiele für als Handelsprodukte erhältliche Polyisocyanate sind Desmodur VL (Polyisocyanat auf Basis Diphenylmethandiisocyanat (MDI) ,Bayer AG), Desmodur Z 4370 (Polyisocyanat auf Basis Isophorondiisocyanat (IPDI), Bayer AG), Desmodur N3400 ( Aliphatisches HDI-Uretdion, Bayer AG), Thanecure T9 (Aromatisches TDI-Uretdion, TSE Industries), Crelan VP LS 2147 und Crelan VP LS 2347 (Aliphatische IPDI-Uretdione, Bayer AG), Polurene KD (Polyisocyanurat auf Basis Toluylendiisocyanat (TDI), SAPICI), Uronal RA.50 (Polyisocyanurat auf Basis TDI der Firma Galstaff), Polurene A (Polyisocyanat auf Basis TDI-Trimethylolpropan (TMP), SAPICI), Polurene MC (Polyisocyanat auf Basis TMP-IPDI, SAPICI), Polurene MD.70 (Polyisocyanat auf Basis TMP-TDI-MDI, SAPICI). Diese Handelsprodukte liegen häufig nicht in reiner Form eines Polyisocyanats vor, sondern als Gemische von Polyisocyanaten ähnlicher Struktur. Bevorzugt werden als Polyisocyanate in der vorliegenden Erfindung Trimerisierungsprodukte von Diisocyanaten auf Basis von Hexamethylendiisocyanat (HDI), Isophorodiisocyanat (IPDI) und/oder Toluylendiisocyanat (TDI) eingesetzt.

Unter der oben genannten "mittleren Funktionalität von mindestens 2" wird verstanden, dass die Handelsprodukte hinsichtlich der Isocyanatgruppen die angegebene Funktionalität von mindestens 2 aufweisen. Beispielsweise bedeutet "Funktionalität von 3", dass ein Molekül im statistischen Mittel 3 freie Isocyanatgruppen enthält.

Die mittlere Funktionalität kann man experimentell dadurch ermitteln, dass man das zahlenmittlere Molekulargewicht Mₙ und die NCO-Zahl, wie im Beispielteil der vorliegenden Erfindung beschrieben, bestimmt und daraus das NCO-Äquivalentgewicht errechnet. Die mittlere Funktionalität ist der Quotient aus dem zahlenmittleren Molekulargewicht und dem NCO-Äquivalentgewicht. Bevorzugt liegt die mittlere Funktionalität bei 2,5 bis 10, besonders bevorzugt bei 3 bis 6.

### Komponente (b)

Die Polyisocyanate der Komponente (a) werden erfindungsgemäß mit Verbindungen der Komponente (b) der obigen Formel (I) umgesetzt.

Die Verbindungen der Formel (I) sind dadurch gekennzeichnet, dass sie eine, zwei oder drei gegenüber Isocyanatgruppen reaktive Gruppen XH enthalten. Die Verbindungen der Formel (I) reagieren über ihre reaktiven XH-Gruppen irreversibel mit den Isocyanaten. "Irreversibel" bedeutet in diesem Kontext, dass die Verbindungen der Formel (I) nicht wie ein Blockierungsmittel (beispielsweise thermisch) wieder abgespalten werden können. Somit stehen die Isocyanatgruppen des Polyisocyanats nach der Umsetzung mit der XH-Gruppe der Verbindung der Formel (I) nicht für weitere Reaktionen zur Verfügung. Somit sind insbesondere die Verbindungen der Komponente (c2) als Verbindungen der Formel (I) ausgeschlossen.

Für die Y-Gruppe der Verbindung der allgemeinen Formel (I) gilt, dass diese nicht gegenüber Isocyanaten reaktiv ist, d.h. dass diese keine aktiven Wasserstoffatome nach Zerewitinoff enthalten. Dies bedeutet insbesondere, dass die Gruppe Y frei von den oben genannten Gruppen XH ist und auch nicht zur reversiblen Blockierung von Isocyanatgruppen befähigt ist.

Beispiele für XH sind OH, NH₂, NHR, SH oder COOH, wobei R für eine verzweigte oder unverzweigte Alkylgruppe mit 1 bis 18 Kohlenstoffatomen steht. Bevorzugt steht XH für OH, NH₂ oder NHR. Besonders bevorzugt sind diese funktionellen Gruppen Hydroxylgruppen, weil diese Verbindungen leicht zugänglich und/oder im Handel erhältlich sind und die erhaltenen Reaktionsprodukte gut löslich in Lösungsmitteln sind, die beim späteren Einsatz der Additive gemäß der Erfindung zur Anwendung kommen.

Die gegenüber Isocyanaten nicht reaktiven Gruppen Y können die Heteroatome O, S, Si und/oder N aufweisen und/oder Ether-, Urethan-, Carbonat-, Amid- und/oder Estergruppen enthalten. Gegebenenfalls ist in den Gruppen Y Wasserstoff gegen Halogen, vorzugsweise Fluor und/oder Chlor substituiert.

Als Verbindungen der Formel (I) können aliphatische, cycloaliphatische und/oder araliphatische Verbindungen eingesetzt werden. Es können auch Gemische solcher Verbindungen, das heißt mindestens zwei verschiedene Verbindungen der Formel (I) eingesetzt werden. Die aliphatischen oder araliphatischen Verbindungen der Formel (I) können gradkettig oder verzweigt sein. Sie können gesättigt oder ungesättigt vorliegen. Gesättigte Verbindungen sind jedoch bevorzugt.

Beispiele für Verbindungen der Formel (I) sind geradkettige oder verzweigte Alkohole wie Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol Cyclohexanol, Fettalkohole, Alkylphenole, Monophenyldiglykol, Alkylnaphthole, Phenylethanol, hydroxyfunktionelle Vinylverbindungen wie zum Beispiel Hydroxybutylvinylether, hydroxyfunktionelle Acrylate oder Methacrylate wie zum Beispiel Hydroxyethylacrylat, Hydroxyethylmethacrylat, Hydroxybutyl(meth)acrylat und Hydroxyethylethylenharnstoff sowie Polyolefinpolyole wie gegebenenfalls hydrierte, hydroxyfunktionelle Polybutadiene, Polypropylene, Ethylen/Butylen-Copolymere oder Polystyrole mit einer mittleren Funktionalität von 1 bis 3. Beispiele für entsprechende Handelsprodukte sind die unter der Bezeichnung Polytail® von Mitsubishi Chemical erhältlichen hydroxyterminierten hydrierten Polybutadiene oder die hydroxyterminierten Ethylen/Butylen-Copolymere Kraton® Liquid L-1203, L-1302 und L-2203 von Kraton Polymers oder die als NISSO-PB erhältlichen flüssigen Polybutadiene von Nippon Soda Co. oder die von Baker Petrolite als Unilin® Alcohols erhältlichen gesättigten, langkettigen, linearen, weitgehend primären Alkohole mit Kettenlängen bis zu C₅₀ und Molekulargewichten von 375 bis 700 g/mol und deren unter der Bezeichnung Unithox® erhältlichen Ethoxylate. Weitere Beispiele sind unter anderem in der EP-A-154 678 beschrieben.

Als Verbindungen der Formel (I) können auch solche eingesetzt werden, die Ester, Ether, Urethan, Carbonat, Amid und/oder Siloxan-Gruppen oder Kombinationen dieser Gruppen enthalten. Es kann sich also zum Beispiel um Polyether, Polyester, Polyurethane, Polycarbonate, Polysiloxane oder zum Beispiel gemischte Polyether-Polyester handeln.

Polyester können zum Beispiel durch Umsetzung von Dicarbonsäuren sowie deren veresterbaren Derivaten wie beispielsweise Anhydriden, Säurechloriden oder Dialkylestern wie Dimethylestern oder Diethylestern durch Umsetzung mit Diolen und mono-, di-, oder trifunktionellen Startkomponenten hergestellt werden. Die Bildung von Dihydroxypolyestern kann bei Bedarf durch Einsatz entsprechend stöchiometrischer Mengen an Monohydroxyverbindungen, wie sie oben beschrieben wurden, zurückgedrängt werden. Die Veresterung kann in Substanz oder auch durch azeotrope Veresterung in Anwesenheit eines Schleppmittels durchgeführt werden. Beispiele für Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere und Hydrierungsprodukte. Beispiele für Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol.

Bevorzugte Polyester der Formel (I) sind solche, die durch Polykondensation einer oder mehrerer, gegebenenfalls alkylsubstituierter, Hydroxycarbonsäuren und/oder Ringöffnungspolymerisation der korrespondierenden Lactone wie zum Beispiel Propiolacton, Valerolacton, Caprolacton mittels einer Mono-, Di, - oder Trihydroxy-Startkomponente, wie in EP-A-154 678 (US-A-4 647 647) beschrieben, erhalten werden können. Bevorzugt besitzen diese ein zahlenmittleres Molekulargewicht Mₙ von 150 bis 5000 g/mol. Als Startkomponente sind im Prinzip alle anderen als Verbindungen der Formel (I) aufgeführten Verbindungen einsetzbar. Die als Startkomponente verwendeten mono-, di, - oder trifunktionellen Alkohole besitzen vorzugsweise 1 bis 30, besser noch 4 bis 14 Kohlenstoffatome. Beispielhaft genannt sind n-Butanol, längerkettige, gesättigte und ungesättigte Alkohole wie Propargylalkohol, Oleylalkohol, Linoleylalkohol, Oxoalkohole, Cyclohexanol, Phenylethanol, Neopentylalkohol, Ethylenglykol, Propylenglyko und Glycerin, aber auch fluorierte Alkohole, hydroxyfunktionelle Polydialkylsiloxane, hydroxyfunktionelle Vinylverbindungen wie zum Beispiel Hydroxybutylvinylether, hydroxyfunktionelle Acrylate oder Methacrylate wie zum Beispiel Hydroxyethylacrylat, Hydroxyethylmethacrylat, Hydroxybutyl(meth)acrylat, Hydroxyfunktionelle polyalkylenglykolacrylate und -methacrylate. Es können auch Alkohole der zuvor beschriebenen Art und substituierte und unsubstituierte Phenole durch Alkoxylierung nach bekannten Verfahren mit Alkylenoxiden wie zum Beispiel Ethylenoxid, Propylenoxid, Butylenoxid und/oder Styroloxid in Polyoxyalkylenmonoalkyl-, Polyoxyalkylenmonoaryl-, Polyoxyalkylenmonoaralkyl- und Polyoxyalkylenmonocycloalkylether überführt werden und diese Hydroxypolyether in der vorbeschriebenen Art als Startkomponente für die Lactonpolymerisation eingesetzt werden. Es können auch jeweils Gemische der vorgenannten Verbindungen eingesetzt werden. Die Lactonpolymerisation wird nach bekannten Verfahren, initiert durch beispielsweise p-Toluolsulfonsäure oder Dibutylzinndilaurat, bei Temperaturen von etwa 70° C bis 180°C durchgeführt. Besonders bevorzugt sind Polyester auf ε-Caprolacton-Basis, gegebenenfalls in Kombination mit δ-Valerolacton.

Als Verbindungen der Formel (I) können auch Mono-, Di-, oder Trihydroxypolyether eingesetzt werden. Diese können zum Beispiel durch Alkoxylierung der anderen als Verbindungen der Formel (I) beschriebenen Verbindungen wie Alkanolen, Cycloalkanolen, Phenolen oder den vorstehend beschriebenen Hydroxypolyestern mit Alkylenoxiden wie Ethylenoxid, Propylenoxid, Butylenoxid, Styroloxid oder Mischungen davon erhalten werden. Im Falle von gemischten Polyethern können diese statistisch, als Gradient oder in Blöcken angeordnet sein. Diese Polyether haben zweckmäßig ein zahlenmittleres Molekulargewicht (Mₙ) im Bereich von etwa 100 bis 10000, bevorzugt von 150 bis 5000 und besonders bevorzugt von 200 bis 3500 g/mol. Bevorzugt sind Polyether auf Basis von Ethylenoxid, Propylenoxid und deren Mischungen. Weiter bevorzugt sind monohydroxyfunktionelle Polyoxyalkylenmonoalkohole wie Allylpolyether wie beispielsweise Polyglykol A 350, Polyglykol A 500, Polyglykol A 1100, Polyglykol A 11-4, Polyglykol A 20-10 oder Polyglykol A 20-20 der Clariant AG oder Pluriol^{®} A 010 R, Pluriol^{®} A 11 RE, Pluriol^{®} A 13 R, Pluriol^{®} A 22 R oder Pluriol^{®} A 23 R der BASF AG, Vinylpolyether wie beispielsweise Polyglykol V 500, Polyglykol V 1100 oder Polyglykol V 5500 der Clariant AG, Methanol gestartete Polyoxyethylenmonoalkohole wie beispielsweise Pluriol^{®} A 350 E, Pluriol^{®} A 500 E, Pluriol^{®} A 750 E, Pluriol^{®} A 1020 E, Pluriol^{®} A 2000 E oder Pluriol^{®} A 5010 E der BASF AG, Alkanol gestartete Polyoxypropylenmonoalkohole wie z.B. Polyglykol B01 / 20, Polyglykol B01 / 40, Polyglykol B01 / 80, Polyglykol B01 / 120 oder Polyglykol B01 / 240 der Clariant AG oder Pluriol^{®} A 1350 P oder Pluriol^{®} A 2000 P der BASF AG, und mit verschiedenen Fettalkoholen gestarteten Polyalkoxylate mit variablem Alkoxylierungsgrad, wie sie dem Fachmann unter den Handelsnamen Lutensol^{®} A, Lutensol^{®} AT, Lutensol^{®} AO, Lutensol^{®} TO, Lutensol^{®} XP, Lutensol^{®} XL, Lutensol^{®} AP und Lutensol^{®} ON der BASF AG bekannt sind. Bevorzugt werden Polyoxyalkylenmonoalkohole verwendet, die Ethylenoxid- und/oder Propylenoxid- und/oder Butylenoxidgruppen enthalten und gegebenenfalls mit Styroloxid modifiziert sind. Besonders bevorzugt ist die Verwendung von Polyoxyalkylenmonoalkoholen wie beispielsweise Polyglykol B 11/50, Polyglykol B 11/70, Polyglykol B 11/100, Polyglykol B 11/150, Polyglykol B 11/300 oder Polyglykol B 11/700 von der Clariant AG, Pluriol^{®} A 1000 PE, Pluriol^{®} A 1320 PE, oder Pluriol^{®} A 2000 PE der BASF AG oder Terralox WA 110 von DOW Chemicals, bei denen es sich um Butanol gestartete Polyoxyalkylene aus Ethylen- und Propylenoxid mit einer terminalen OH-Gruppe handelt.

Bevorzugte Verbindungen der Formel (I) sind hydroxyfunktionelle Polyether, hydroxyfunktionelle Polyester, hydroxyfunktionelle Polyether-Polyester und/oder aliphatische und/oder cycloaliphatische Alkohole mit 2 bis 30 Kohlenstoffatomen, deren Wasserstoffatome gegebenenfalls teilweise durch Halogen und/oder Arylreste ersetzt sind.

Als Verbindungen der Formel (I) können auch mono-, di- oder trifunktionelle Polysiloxane wie zum Beispiel amino- oder hydroxyfunktionelle Polydialkylsiloxane, die nicht an Siliciumatome gebundene Hydroxylgruppen enthalten oder Aminoalkylpolysiloxane verwendet werden, die gegebenenfalls polyether- und/oder polyestermodifiziert sein können. Die jeweiligen aminofunktionellen Verbindungen tragen dabei primäre oder sekundäre, nicht jedoch tertiäre Aminogruppen. Bevorzugt werden Hvdroxvalkylpolydimethylsiloxane mit zahlenmittleren Molekulargewichten Mₙ von 400 bis 8000 g/mol, besonders bevorzugt 400 bis 5000 g/mol und ganz besonders bevorzugt 400 bis 2000 g/mol eingesetzt.

Als Verbindungen der Formel (I) können auch Polyurethane, Polyether-Polyurethane, Polyester-Polyurethane und/oder Polyether-Polyester-Polyurethane eingesetzt werden, die durch Additionsreaktion von Diisocyanaten mit Dihydroxyverbindungen in Anwesenheit von mono-, di-, oder trifunktionellen Startkomponenten erhalten werden können.

Als Diisocyanat zum Aufbau der urethangruppenhaltigen Verbindungen der Formel (I) können die aus der Polyurethanchemie an sich bekannten aliphatischen, cycloaliphatischen und/oder aromatischen Diisocyanate mit 4 bis 15 Kohlenstoffatomen eingesetzt werden, wie Tetramethylendiisocyanat, Hexamethylendiisocyanat, Trimethylhexamethylendiisocyanat, Dodekamethylendiisocyanat, Isophorondiisocyanat, Toluylendiisocyanat, Diphenylmethandiisocyanat, Methylenbis(-4-cyclohexylisocyanat) oder 1,4-Cyclohexanbis(methylisocyanat). Als Hydroxyverbindungen zum Aufbau der urethangruppenhaltigen Verbindungen nach Formel (I) werden bevorzugt Diole mit 2 bis 12 Kohlenstoffatomen, Polyoxyalkylenglykole und dihydroxyfunktionelle Polyester mit bevorzugten zahlenmittleren Molekulargewichten Mₙ von höchstens 2000 g/mol eingesetzt. Als monohydroxyfunktionelle Startkomponente können Alkohole mit bis zu 30 Kohlenstoffatomen, wie sie bereits zur Herstellung der Polyester nach Formel (I) beschrieben sind, aber auch die als Verbindung nach Formel (I) beschriebenen Hydroxypolyester und Hydroxypolyether eingesetzt werden. Die Polyester haben bevorzugt ein zahlenmittleres Molekulargewicht Mₙ von 300 bis 5000 g/mol und die Polyether von 200 bis 2000 g/mol.

Der Rest Y kann auch Carbonatgruppen enthalten, wie sie durch Umsetzung nach dem Stand der Technik mit offenkettigen und/oder cyclischen Carbonaten erhalten werden. Geeignet sind zum Beispiel mit Carbonaten modifizierte lineare Polyester oder Polycarbonatdiole, wie sie in der Polyurethanherstellung verwendet werden. Beispiele sind beschrieben in US 410 152 9, EP 0358 555, oder WO 02/085507. Geeignete Carbonate sind zum Beispiel aliphatische, cycloaliphatische, araliphatische und/oder aromatische Kohlensäurester wie zum Beispiel Dialkylcarbonate wie Dimethylcarbonat, Diethylcarbonat oder Diphenylvarbonat , Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Der Rest Y kann weitere Gruppen tragen, die sich bei der Bildung des Additionsproduktes inert verhalten wie beispielsweise die Carbonsäureamidgruppe (-NHCO-), nicht aktivierte Doppelbindungen oder Harnstoffgruppierungen (-NHCONH-). Der Anteil der Verbindungen der Formel (I), die solche Gruppen tragen sollte bezogen auf alle eingesetzten Verbindungen der Formel (I) vorzugsweise unter 50 mol%, bevorzugt unter 5 mol% liegen. Besonders bevorzugt sind Verbindungen, die gar keine dieser Gruppen enthalten.

Die gegebenenfalls vorhandenen Ester, Ether, Urethan, Carbonat und/oder Siloxan-Gruppen können in Blockstruktur vorliegen (beispielsweise Poly(ethylenoxidblock-propylenoxydblock-epsilon-caprolacton), einen Gradienten bilden oder auch statistisch angeordnet sein.

Als Verbindung der Formel (I) können auch Polyacrylsäureester und/oder Polymethacrylsäureester mit im Mittel bis zu drei NCO-reaktiven Gruppen eingesetzt werden, wie sie durch anionische, kationische oder radikalische Polymerisation von Acrylsäureestern beziehungsweise Methacrylsäureestern erhalten werden. Bevorzugt sind monohydroxyfunktionelle Verbindungen. Monohydroxyfunktionelle Polyacrylsäureester bzw. Polymethacrylsäureester sind solche, die im Mittel eine Hydroxylgruppe im Molekül enthalten. Solche Verbindungen sind auf diesem Gebiet der Technik bereits zur Herstellung von anderen Dispergiermitteln verwendet worden, wie sie beispielsweise in der US-A-4 032 698 oder EP 318 999 beschrieben sind. Diese Polyacrylate haben vorzugsweise ein zahlenmittleres Molekulargewicht Mₙ von 300 bis 20000 g/mol, bevorzugter 500 bis 10000 g/mol. Sie können in Blockstruktur oder auch statistisch angeordnet sein oder einen Gradienten bilden.

Die Carboxylgruppe der monomeren Acrylate bzw. Methacrylate kann beispielsweise verestert sein mit aliphatischen, cycloaliphatischen und/oder aromatischen Alkoholen wie Methanol, Butanol, Cyclohexanol, 2-Ethylhexanol, Laurylalkohol, Stearylalkohol, Isobornylalkohol, Benzylalkohol, oder mit Etheralkoholen wie 2-Methoxyethanol, 2-Phenoxyethanol, Tetrahydrofurfurylalkohol oder Glycidol, mit Polyesteralkoholen wie hydroxyfunktionellem Polycaprolacton, oder mit Alkoxypolyalkylenglykolen wie Methoxypolyethylenglykol oder Methoxypolypropylenglykol verestert sein. Das zahlenmittlere Molekulargewicht Mₙ der Veresterungskomponente liegt dabei vorzugsweise unter 2000 g/mol. Zur Herstellung der hydroxyfunktionellen Polyacrylate bzw. Polymethacrylate können auch Mischungen verschiedener vorstehend beschriebener Monomere eingesetzt werden. Zur Herstellung dieser Polyacrylate bzw. Polymethacrylate können als Comonomere auch Vinylester wie Vinylacetat, Vinylether wie Vinylethylether, Styrol, Vinyltoluol und/oder Vinylcyclohexan verwendet werden. Die so erhaltenen Copolymere wurden dabei aus vorzugsweise nicht mehr als 50 Mol % an nicht acrylfunktionellen Comonomeren synthetisiert.

Als Verbindung der Formel (I) können auch hydroxyfunktionelle Poly-2-alkyl-2-oxazoline oder Poly-2-alkyl-2-oxazine fungieren. Bevorzugt werden monohydroxyfunktionelle Verbindungen eingesetzt. Poly-2-alkyl-2-oxazoline oder Poly-2-alkyl-2-oxazine werden, wie dem Fachmann bekannt, durch kationische, ringöffnende Polymerisation von 2-Alkyl-2-oxazolinen oder 2-alkyl-2-oxazinen mit Initiatoren wie beispielsweise Para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazolinium trifluormethansulfonat als initiierender Spezies. (A. Groß, G. Maier, O. Nuyken, Macromol. Chem. Phys. 197, 2811-2826 (1996)). Durch Wahl des Alkylsubstituenten lässt sich die Verträglichkeit steuern, so ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline oder Poly-2-alkyl-2-oxazine besitzen vorzugsweise ein zahlenmittleres Molekulargewicht Mₙ von 300 bis 20000 g/mol, bevorzugter 500 bis 10000 g/mol.

In Anwendungen, in denen eine breite Verträglichkeit gefragt ist, wie beispielsweise im Universalpastenbereich, ist es häufig von Vorteil, Additionsverbindungen einzusetzen, die mit Gemischen verschiedener Verbindungen der Formel (I) hergestellt werden. Sollen die erfindungsgemäßen Additionsverbindungen zum Beispiel in Universalabtönpasten für wässrige und unpolare Systeme verwendet werden, ist eine Kombination von wasserlöslichen mit unpolaren Verbindungen der Formel (I) von Vorteil.

Das zahlenmittlere Molekulargewicht Mₙ der Verbindung der Formel (I) ist kleiner als 20000 g/mol und liegt vorzugsweise bei maximal 10000 g/mol, besonders bevorzugt bei maximal 5000 g/mol, ganz besonders bevorzugt bei maximal 3500 g/mol und noch besser bei maximal 2000 g/mol. Das minimale Molekulargewicht Mₙ liegt vorzugsweise bei 100 g/mol, besonders bevorzugt bei 150 g/mol, ganz besonders bevorzugt bei 200 g/mol und am besten bei 400 g/mol. Bevorzugt sollten weniger als 50 mol% der eingesetzten Verbindungen nach Formel (I) ein zahlenmittleres Molekulargewicht von kleiner 100 g/mol besitzen, besonders bevorzugt weniger als 25 mol%, ganz besonders bevorzugt weniger als 15 mol% und am besten 0 mol%.

Bei der Umsetzung mit den monofunktionellen Verbindungen der Formel (I) werden 15% bis 90% , bevorzugt 20% bis 70% und besonders bevorzugt 25% bis 60% der ursprünglich eingesetzten freien NCO-Gruppen umgesetzt.

Beispiele für di- oder trifunktionelle Verbindungen der Formel (I) sind Diole und Triole beziehungsweise Diamine und Triamine ohne tertiäre Aminogruppen mit 2 bis 12 Kohlenstoffatomen, Dihydroxydialkylsulfide und Dihydroxysulfone. Beispiele sind Butandiol, Hexandiol, Cyclohexandimethanol, Neopentylglykol, Ethylenglykol, Glycerin, Trimethylolpropan, Fettsäuredialkanolamide, Thiodiglykol, Di(4-Hydroxyphenyl)sulfon sowie hydroxyfunktionelle Polybutadiene mit einer mittleren Funktionalität von 2 bis 3. Eine bevorzugte Gruppe von Verbindungen der Formel (I) sind Polyoxyalkylenglykole besonders bevorzugt mit Alkylengruppen mit 2 bis 4, ganz besonders bevorzugt mit 2 Kohlenstoffatomen, und vorzugsweise mit zahlenmittleren Molekulargewichten Mₙ im Bereich von 200 bis 2000 g/mol, besonders bevorzugt 400 bis 1500 g/mol. Ethoxylate mit 3 Hydroxylgruppen erhält man beispielsweise durch Polymerisation unter Verwendung von trifunktionellen Alkoholen als Starterkomponente. Bevorzugt als Polyoxyalkylenglykole sind Polyethylenglykole.

Als di- oder trifunktionelle Verbindungen der Formel (I) können auch solche eingesetzt werden, die durch Polymerisation eines oder mehrerer Lactone, bevorzugt epsilon-Caprolacton, wie es bereits erwähnt wurde, mittels Di- oder Trihydroxy-Startkomponenten erhalten werden können. Vorzugsweise haben diese Polyesterpolyole ein zahlenmittleres Molekulargewicht Mₙ von 500 bis 2000 g/mol. Als Startkomponente ist Butandiol oder Ethylenglykol bevorzugt. Es kommen aber auch die oben genannten Diole oder Triole als Starterkomponenten in Frage.

In einer bevorzugten Ausführungsform handelt es sich bei den polyfunktionellen Verbindungen der Formel (I) um di- oder trifunktionelle Polyether, Polyester oder Polyether-Polyester.

Als mehrfachfunktionelle Verbindungen der Formel (I) können auch Polyurethane, Polyether-Polyurethane, Polyester-Polyurethane und/oder Polyether-Polyester-Polyurethane eingesetzt werden, die durch Additionsreaktion eines Diisocyanates mit einer Dihydroxyverbindung analog zu den entsprechenden monofunktionellen Verbindungen nach Formel (I) erhalten werden können. Vorzugsweise haben diese urethanhaltigen Verbindungen nach Formel (I) eine mittlere Funktionalität von höchstens 2 und ein zahlenmittleres Molekulargewicht von 300 bis 2500 g/mol, bevorzugt von 500 bis 1500 g/mol.

Die di- oder trifunktionellen Verbindungen der Formel (I) bewirken eine Vernetzung zwischen den Reaktionsprodukten aus Polyisocyanat und monofunktionellen Verbindungen der Formel (I). Beispielsweise können die Ausgangsprodukte in solchen Mengen eingesetzt werden, dass die di- oder trifunktionellen Verbindungen der Formel (I) das Zentrum des Moleküls darstellen, und dass an sie an die Polyisocyanate gebunden sind, deren verbleibende Isocyanatgruppen mit monofunktionellen Verbindungen der Formel (I) umgesetzt sind beziehungsweise werden. Es kann naturgemäß auch eine gewisse Übervernetzung oder Untervernetzung vorliegen.

Bei der Umsetzung mit den di- oder trifunktionellen Verbindungen der Formel (I) werden 0% bis 45% und bevorzugt 0% bis 25% der ursprünglich eingesetzten NCO-Gruppen umgesetzt. Besonders bevorzugte Produkte werden ganz ohne Verwendung von di- oder trifunktionellen Verbindungen der Formel (I) erhalten.

Insgesamt werden mit den Verbindungen der Formel (I) mindestens 20%, besonders bevorzugt mindestens 25 und maximal 90%, vorzugsweise maximal 80%, besonders bevorzugt maximal 70%, der ursprünglich eingesetzten NCO-Gruppen des Polyisocyanats der Komponente (a) umgesetzt.

Die Umsetzung der Polyisocyanate mit verschiedenen Verbindungen der Formel (I) kann in einem einzigen Reaktionsschritt oder in mehreren Reaktionsschritten nacheinander durchgeführt werden. Das kann in beliebiger Reihenfolge geschehen. In vielen Fällen ist es allerdings zweckmäßig, das Polyisocyanat nacheinander mit den Komponenten in der Reihenfolge zuerst monofunktionelle und danach polyfunktionelle Verbindungen umzusetzen. Die Isocyanataddition kann, je nach Reaktivität der einzelnen Reaktionspartner, in dem für diese Art von Reaktion üblichen Temperaturbereich von Raumtemperatur bis etwa 150 °C erfolgen. Zur Beschleunigung und Reduzierung von Nebenreaktionen können die nach dem Stand der Technik bekannten und üblichen Katalysatoren wie tertiäre Amine, wie beispielsweise Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie beispielsweise Titansäureester, Eisenverbindungen wie beispielsweise Eisen-(III)-acetylacetonat, Zinnverbindungen, beispielsweise Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche verwendet werden. Diese Katalysatoren werden üblicherweise in Mengen von 0,0001 bis 0,1 Gew.-Teilen pro 100 Gew.-Teile Polyisocyanat eingesetzt.

### Komponente (c)

### Komponente (c1)

Als Verbindungen M-Q nach Formel (II) werden Verbindungen eingesetzt, worin M für einen organischen Rest mit einer zahlenmittleren Molmasse von maximal 1000 g/mol, bevorzugt maximal 500 g/mol und besonders bevorzugt 300 g/mol steht, der i) mindestens eine tertiäre Aminogruppe und mindestens eine OH-Gruppe oder ii) mindestens eine hydrolisierbare Silangruppe enthält, und worin Q für NH₂, NHR oder OH steht (wobei R eine lineare oder verzweigte Alkylgruppe mit 1 bis 18 Kohlenstoffatomen darstellt).

Vorzugsweise enthält M im Falle i) 1 bis 10, besonders bevorzugt 1 bis 5, und ganz besonders bevorzugt 1 bis 3, am besten 1 bis 2 OH-Gruppen. Primäre OH-Gruppen sind bevorzugt.

Beispiele für M-Q mit tertiären Aminogruppen und OH-Gruppen sind Triethanolamin, N-Methyldiethanolamin, Aminopropylmethylethanolamin, 3-(Diethylamino)propan-1,2-diol, Tetrakis(2-hydroxypropyl)ethylenediamin, Bis(2-hydroxyethyl)dodecylamin, Bis(2-hydroxyethyl)octadecylamin.

Bei den Verbindungen M-Q mit mindestens einer hydrolisierbaren Silangruppe steht M vorzugsweise für die Gruppe -R^{a}-Si(OR^{b})ₘ(R^{c})₃₋ₘ, wobei R^{a} für einen Alkylenrest mit 1 bis 12 Kohlenstoffatomen, einen Cycloalkylenrest mit 4 bis 6 Kohlenstoffatomen oder einen Arylenrest mit 6 bis 10 Kohlenstoffatomen steht und R^{b} und R^{c} Alkylgruppen mit 1 bis 10 Kohlenstoffatomen darstellen und m = 1 bis 3 ist.

Vorzugsweise wird als wenigstens eine hydrolysierbare Silangruppe aufweisende Verbindung M-Q wenigstens eine Verbindung ausgewählt aus der Gruppe umfassend 3-(N-Allylamino)propyltrimethoxysilan, 4-Aminobutyltriethoxysilan, 1-Amino-2-(dimethylethoxysilyl)propan, N-(2-Amihoethyl)-3-aminoisobutyldimethylmethoxysilan, N-(2-Aminoethyl)-3-aminoisobutylmethyldimethoxysilan, (Aminoethylaminomethyl)phenethyltrimethoxysilan, N-(2-Aminoethyl)-3-aminopropylmethyldimethoxysilan, N-(2-Aminoethyl)-3-aminopropyltriethoxysilan, N-(2-Aminoethyl)-3-aminopropyltrimethoxysilan, N-(6-Aminohexyl)aminomethyltrimethoxysilan, N-(6-Aminohexyl)aminopropyltrimethoxysilan, N-(2-Aminoethyl)-11-aminoundecyltrimethoxysilan, 3-(m-Aminophenoxy)-propyltrimethoxysilan, m-Aminophenyltrimethoxysilan, p-Aminophenyltrimethoxysilan, N-3-[Amino(polypropylenoxy)]aminopropyltrimethoxysilan, 3-Aminopropyldiisopropylethoxysilan, 3-Aminopropyldimethylethoxysilan, 3-Aminopropylmethyldiethoxysilan, 3-Aminopropyltriethoxysilan, 3-Aminopropyltrimethoxysilan, 11-Aminoundecyltriethoxysilan, Bis(2-hydroxyethyl)-3-aminopropyltriethoxysilan, Bis(methyldiethoxysilylpropyl)amin, Bis(triethoxysilylpropyl)amin, Bis(trimethoxysilylpropyl)amin, Bis[(3-trimethoxysilyl)propyl]ethylendiamin, Bis(3-trimethoxysilylpropyl)-N-methylamin, n-Butylaminopropyltrimethoxysilan, t-Butylaminopropyltrimethoxysilan, N-Cyclohexylaminopropyltrimethoxysilan, 3-(2,4-Dinitrophenylamino)propyltriethoxysilan, N-Ethylaminoisobutylmethyldiethoxysilan, N-Ethylaminoisobutyltrimethoxysilan, N-(3-Methacryloxy-2-hydroxypropyl)-3-aminopropyltriethoxysilan, N-Methylaminopropylmethyldimethoxysilan, N-Methylaminopropyltrimethoxysilan, N-Phenylaminomethyltriethoxysilan, N-Phenylaminomethyltrimethoxysilan, 3-(N-Styrylmethyl-2-aminoethylamino)propyltrimethoxysilan, (3-Trimethoxysilylpropyl)diethylentriamin, (3-Triethoxysilylpropyl)diethylentriamin, N-Cyclohexylaminomethylmethyldiethoxysilan, N-Cyclohexylaminomethyltriethoxysilan, N-Phenylaminomethyltriethoxysilan oder deren Mischungen. Die endständigen Alkoxygruppen lassen sich in Wasser oder wässrigen Medien hydrolysieren, so dass Hydroxyfunktionalitäten entstehen Alkoxysilanhaltige Addukte eignen sich insbesondere für hydroxylgruppenhaltige Oberflächen wie Quarz oder Glasfasern, mit denen sie unter Reaktion eine besonders feste Bindung eingehen und daher auch Verbesserungen bei Haftung und mechanischen Eigenschaften bewirken können, insbesondere in Kombination mit mitvernatzbaren Resten Y mit zum Beispiel Acylgruppen.

### Komponente (c2)

Blockierungemittel dienen der reversiblen Umsetzung mit Isocyanatgruppen. Von diesen können die Blocklerungsmittel nach Umsetzung beispielsweise thermisch wieder abgespalten werden, so dass die Isocyanatgruppen für eine Umsetzung wieder zur Verfügung stehen. Der Begriff "blockiertes Isocynat" ist im vorliegenden Fachgebiet ein für den Durchschnittsfachmann geläufiger Begriff. Die Blockierungsmittel dienen zur Herstellung blockierter Isocyanate.

Die Blockierungsmittel sind aus dem Stand der Technik bekannt, dabei handelt es sich um Lactame, Malonester, Alkylacetoacetate, Phenols, sowie Diisopropylamin, 1,2,4- Triazol, und Imidazol, wie zum Beispiel Malonsäureediethylester, Acetessigester, epsflon-Caprolactam oder beliebige Gemische dieser Blockierungsmittel. Von den vorgenannten Verbindungsklassen sind solche Vertreter der Verbindungsklassen als Blockierungsmittel ausgeschlossen, die neben der Isocyanatgruppen reversibel blockierenden Gruppe, eine oder mehrere Gruppen tragen, die irreversibel mit Isocynatgruppen reagieren. So sind insbesondere solche Vertreter der Verbindungsklassen ausgeschlossen, die unter die Definition der Formel (I) fallen. Diese Vertreter der entsprechenden Verbindungsklassen werden ausschließlich der Komponente (b) zugeordnet.

Bevorzugt werden Imidazol, und epsilon-Caprolactam oder Gemische dieser Verbindungen verwendet. Besonders bevorzugt ist Imidazol.

Die Herstellung der blockierten Polyisocyanatgruppen erfolgt beilspielsweise durch Umsetzung nach den aus dem Stand der Technik bekannten Methoden. Diese sind zum Beispiel In Liebigs Annalen von 1949, Band 562, Seiten 205 bis 229 beschrieben. Die Herstellung der blockierten Polyisocyanataddukte kann durch direkte Umsetzung der Isocyanatgruppen mit dem Blockierungsmittel erfolgen oder bei C-H-aciden Blockierungsmitteln wie Malonsäureestern unter Zusatz von Deprotonierungsmitteln.

### Komponente (c3)

Die Komponente (c3) ist optional und wird durch die allgemeine Formel (III) als Z-Q repräsentiert. Die Gruppe Z ist ein organischer basischer Rest mit mindestens einer tertiären Aminogruppe, der keine NCO-reaktiven Gruppen enthält. Vorzugsweise ist der Rest Z eine aliphatische oder cycloaliphatische Gruppe mit mindestens einer tertiären Aminogruppe gegebenenfalls in Form eines tertiären Ringstickstoffatoms eines heterocyclischen Ringsystems. Die tertiäre Aminogruppe beziehungsweise das heterocyclische Ringsystem mit tertiärem Ringstickstoff, kann direkt an die Gruppe Q gebunden-sein oder über eine organische Brückengruppe ("Spacer"). Der Spacer über den die tertiäre Aminogruppe beziehungsweise das heterocyclische Ringsystem mit tertiärem Ringstickstoff an die Gruppe Q gebunden sein kann umfasst vorzugsweise 2 bis 10, besonders bevorzugt 2 bis 5 Kohlenstoffatome. Besonders bevorzugt handelt es sich um eine Alkylengruppe mit 2 bis 10, ganz besonders bevorzugt 2 bis 5 Kohlenstoffatomen oder eine Polyethergruppe mit der gleichen Anzahl an Kohlenstoffatomen. Die Gruppe Q ist wie für Komponente (c1) definiert.

Eine Gruppe von Verbindungen, die als Verbindungen Z-Q der Formel (III) verwendet werden können, besteht aus Monohydroxyaminen mit einer tertiären Aminogruppe oder aliphatischen Diaminen mit einer tertiären Aminogruppe und einer primären oder sekundären Aminoguppe wie beispielsweise (N,N-Diethylamino)ethanol, (N,N-Dimethylamino)ethanol, (N,N-Dimethylamino)propanol 2-(Diethylamino)ethylamin, 3-(Dimethylamino)propylamin, 3-(Diethylamino)propylamin, N,N-diethyl-1,4-butandiamin, 1-Diethylamino-4-aminopentan, wovon 3-(Dimethylamino)propylamin und (N,N-Diethylamino)ethanol bevorzugt sind.

Bei einer weiteren Gruppe steht Z für eine ein- oder zweikernige heterocyclische Gruppe, von der ein Ringstickstoffatom, vorzugsweise über eine Alkylengruppe mit 2 bis 5 Kohlenstoffatomen, an die Gruppe Q gebunden ist. Bevorzugte Heterocyclen sind Triazol, Pyrimidin, Imidazol, Pyridin, Morpholin, Pyrrolidin, Piperidin, Benzimidazol, Benzothiazol und/oder Triazin und besonders bevorzugt Imidazol und Benzimidazol. Diese Heterocyclen können einen oder mehrere Substituenten aufweisen. Vorzugsweise tragen sie eine der folgenden Gruppen: Alkyl- und/oder Alkoxy-Gruppen mit 1 bis 6, vorzugsweise 1 bis 4 Kohlenstoffatomen (wobei eine Methoxygruppe bevorzugt ist) oder tertiäre Aminogruppen.

Es ist bevorzugt, dass die heterocyclischen Gruppen über ein Ringstickstoffatom und eine Alkylengruppe, vorzugsweise mit 2 bis 5 Kohlenstoffatomen an die Gruppe Q gebunden sind. Die heterocyclische Gruppe kann naturgemäß neben diesem Ringstickstoffatom noch weitere Heteroatome einschließlich weiterer Ringstickstoffatome enthalten.

Weitere Beispiele für Verbindungen der Formel (III) sind N-(3-Aminopropyl)imidazol, N-(3-Aminopropyl)morpholin, N-(2-Aminoethyl)piperidin, 1-Methylpiperazin, Aminoethylpiperazin. Charakteristisch für diese Verbindungen ist, dass sie pro Molekül mindestens 1 reaktive Gruppe mit mindestens 1 Zerewitinoff-Wasserstoffatom enthalten, welches mit den NCO-Gruppen reagieren kann, und dass sie darüber hinaus eine stickstoffhaltige basische Gruppe ohne reaktiven Wasserstoff besitzen. Diese basischen Gruppen werden gemäß dem Stand der Technik durch ihren pKa-Wert gekennzeichnet (vergl. US-A-3,817,944; 4,032,698 und 4,070,388). Bevorzugt sind Verbindungen mit basischen Gruppen mit einem pKa-Wert von 2 bis 14, besonders bevorzugt von 5 bis 14, und ganz besonders bevorzugt von 5 bis 12. Der pKa-Wert kann Tabellenwerken entnommen werden. Die vorstehend angegebenen Grenzwerte beziehen sich auf die Messung des pKa-Wertes bei 25°C in einer 0.01-molaren Konzentration in Wasser. Diese basischen Gruppen verleihen den Additionsverbindungen gemäß der Erfindung ebenfalls eine Basizität.

Verbindungen der Formel Z-Q können beispielsweise durch Umsetzung eines (Meth)acrylats oder Epoxids mit einem Amin oder stickstoffhaltigen heterocyclischen Ringsystem erhalten werden. Beispiele für Reaktionsprodukte zwischen einem (Meth)acrylat und einem stickstoffhaltigen heterocyclischen Ringsystem sind die Reaktionsprodukte der Hydroxyethyl- und Hydroxypropylester von (Meth)acrylsäure mit der stickstoffhaltigen heterocyclischen Ringstruktur, wobei die folgenden Strukturelemente an dem Stickstoff der heterocyclischen Ringstruktur angeheftet sind:
-propionsäure-2-hydroxyethylylester, -propionsäure-2-hydroxypropylylester, -2-methylpropionsäure-2-hydroxyethylylester und -2-methylpropionsäure-2-hydroxypropylylester und ethoxylierte und/oder propoxylierte Derivate davon. Bevorzugt sind die Acrylsäureester.

Die Reaktion mit Aminen verläuft in analoger Weise.

Durch Umsetzung eines Epoxids mit einem Amin oder einer stickstoffhaltigen heterocyclischen Verbindung lassen sich ebenfalls die Verbindungen Z-Q herstellen. Bei der Umsetzung entsteht als Gruppe Q eine sekundäre Hydroxygruppe und am reaktionsbeteiligten Stickstoffatom eine tertiäre Aminogruppe.

Zur Herstellung der erfindungsgemäßen Additionsverbindungen können auch Gemische von verschiedenen Ausgangsstoffen wie Gemische von Polyisocyanaten, und/oder Komponenten (b) und/oder Komponenten (c) eingesetzt werden. Einzelne der mehrere der Komponenten (a), (b1), (b2) oder (c) können im Überschuss oder Unterschuss eingesetzt werden. Vorzugsweise werden die Mengenverhältnisse aber so gewählt, dass die Isocyanatgruppen im wesentlichen vollständig umgesetzt werden. Zu verstehen ist, dass vorzugsweise mindestens 90%, besonders bevorzugt mindestens 95%, ganz besonders bevorzugt mindestens 98% und optimal alle Isocyanatgruppen umgesetzt sind.

Durch die basischen Gruppen sind die Additionsverbindungen zur Salzbildung befähigt. Sie können im Sinne der Erfindung als Dispergiermittel auch in Form der entsprechenden Salze eingesetzt werden. In manchen Fällen lässt sich durch eine solche teilweise oder vollständige Versalzung eine Verbesserung der Wirksamkeit und/oder eine verbesserte Löslichkeit oder Verträglichkeit erzielen. Auch in Anwendungen, bei denen die Basizität der Produkte stört, zum Beispiel in sauer katalysierten Systemen, lassen sich häufig Verbesserungen durch teilweise oder vollständige Neutralisation erreichen.

Die Salze werden aus dem erhaltenen Reaktionsprodukt durch Neutralisation mit einer oder mehreren organischen oder anorganischen Säuren oder durch Quaternisierung erhalten. Die zu verwendende Säuremenge richtet sich nach dem Einsatzgebiet. Je nach Einzelfall können die Säurekomponenten äquimolar, im Unterschuss oder im Überschuss eingesetzt werden. Von Polycarbonsäuren kann zum Beispiel auch bis zu einem Äquivalent Polycarbonsäure pro zu neutralisierende basische Gruppe eingesetzt werden, um den Produkten einen sauren Charakter zu geben. Bevorzugt wird etwa äquimolar neutralisiert. Bevorzugt sind Salze mit organischen Carbonsäuren oder sauren Phosphorsäurestern. Beispiele für solche sauren Phosphorsäurester sind aufgeführt in EP 893 155, EP 417 490 und US 5 143 952. Beispiele für Carbonsäuren sind aliphatische und/oder aromatische Carbonsäuren wie kurz- oder langkettige Fettsäuren, Ameisensäure, Essigsäure, Neodecansäure, Ölsäure, Tallölfettsäure, Stearinsäure, Rizinolsäure, natürliche gesättigte oder ungesättigte pflanzliche oder tierische Fettsäuren und deren Maleinsäureanhydrid-Addukte, Maleinsäure, Fumarsäure, Bernsteinsäure, Dodecenylbernsteinsäure, 5-Norbornen-2,3-dicarbonsäure, Adipinsäure, Glutarsäure, Benzoesäure, Nitrobenzoesäure, Phthalsäure, Tetrahydrophthalsäure, Isophthalsäure, Terephthalsäure, dimerisierte oder trimerisierte Fettsäuren, Citronensäure und Abietinsäure.

Sofern die erfindungsgemäße Additionsverbindungen Hydroxylgruppen enthält, können diese gegebenenfalls ganz oder teilweise mit Polycarbonsäuren mit mindestens zwei Carboxylgruppen oder deren Anhydriden in einer solchen Menge unter Esterbildung umgesetzt werden, dass auf jede umzusetzende Hydroxylgruppe mindestens 0,8 Moleküle der Polycarbonsäure oder des Polycarbonsäureanhydrids eingesetzt werden. Die so umgesetzten Additionsverbindungen enthalten somit pro umgesetzter OH-Gruppe eine oder mehrere Carboxylgruppen, die zur Salzbildung mit den Aminogruppen befähigt sind. Beispiele für solche Polycarbonsäuren sind Maleinsäure, Fumarsäure, Bernsteinsäure, Dodecenylbernsteinsäure, 5-Norbornen-2,3-dicarbonsäure, Adipinsäure, Glutarsäure, Phthalsäure, Tetrahydrophthalsäure, Isophthalsäure, Terephthalsäure, dimerisierte oder trimerisierte Fettsäuren und Citronensäure. Bevorzugt werden Anhydride von 1,2-Dicarbonsäuren wie Maleinsäureanhydrid, Bernsteinsäureanhydrid, Dodecenylbernsteinsäureanhydrid, Phthalsäureanhydrid und Tetrahydrophthalsäureanhydrid eingesetzt.

Die erfindungsgemäßen Additionsverbindungen enthalten vorzugsweise keine ethylenisch ungesättigten Gruppen.

Beim Einsatz der bevorzugt einzusetzenden Polyisocyanate mit im Mittel mindestens 2,5 freien Isocyanatgruppen kommt es zur Ausbildung verzweigter, d.h. nicht-linearer Polyurethanstrukturen. Folglich sind nicht-lineare Additionsverbindungen erfindungsgemäß besonders bevorzugt.

Die Herstellung der erfindungsgemäßen Additionsverbindungen kann, je nach Viskosität, in Substanz oder in Gegenwart von geeigneten Lösemitteln, Lösemittelgemischen oder anderen geeigneten Trägermedien durchgeführt werden. Geeignet sind alle Lösemittel oder Trägermedien, die unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind. Hierzu zählen beispielsweise Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether wie Dipropylenglykoldimethylether, Ester von Mono-, Di- oder Polycarbonsäuren wie Ethylacetat, Butylacetat, Butyrolacton, Dimethyl-2-Methylglutarat, Triacetin, Phthalate oder andere Weichmacher, Di- oder Polycarbonsäureester, als "Dibasic Ester" bezeichnete Dialkylester von C₂-C₄-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon und dergleichen. Zweckmäßig wählt man das oder die Lösemittel beziehungsweise Trägermedien bereits unter Berücksichtigung des geplanten Einsatzgebietes aus. Zum Beispiel werden für erfindungsgemäße Additionsverbindungen für den Einsatz in wasserverdünnbaren Lacksystemen oder zur Belegung von Pigmenten in wässriger Suspension nach der Pigmentsynthese bevorzugt Lösemittel eingesetzt, die ganz oder teilweise wasserverdünnbar sind. Sollen die Produkte zum Beispiel dort eingesetzt werden, wo die Anwesenheit von VOC (volatile organic compounds) nicht erwünscht ist, sollte die Formulierung möglichst lösemittelfrei oder in entsprechend hochsiedenden Trägermedien vorliegen.

Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt werden. Die erfindungsgemäßen Additionsverbindungen können je nach Verträglichkeit auch mit Harzen, Harzlösungen, Reaktivverdünnern, Bindemitteln oder mit anderen nach dem Stand der Technik bekannten Additiven kombiniert werden, wie zum Beispiel anderen Netz- und Dispergiermitteln, Antiabsetzmitteln, oberflächenaktiven Additiven wie beispielsweise Silikonen und dergleichen.

Das Lösemittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen mittels Zusatz von Nichtlösern wie aliphatischen Kohlenwasserstoffen, beispielsweise Hexan, anschließendes Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösemittel angelöst werden oder gegebenenfalls in reiner Form beispielsweise bei Pulverlacken, eingesetzt werden. Gegebenenfalls kann das Lösemittel, in dem das Additionsprodukt gelöst ist, nach Zusatz von geeigneten höher siedenden Lösemitteln, gegebenenfalls unter vermindertem Druck und/oder azeotrop unter Zusatz von Wasser, abdestilliert werden und dadurch das Additionsprodukt in ein für das jeweilige Anwendungsgebiet geeignetes Trägermedium überführt werden. Für Anwendungen, bei denen die Verwendung von Feststoffen bevorzugt ist, wie Pulverlacke oder bestimmte Kunststoffverarbeitungsverfahren, können die Additionsverbindungen auch durch weitere nach dem Stand der Technik für Polymere bekannten Verfahren in eine feste Form überführt werden. Beispiele für solche Verfahren sind Mikroverkapselung, Sprühtrocknung, Adsorption auf einen festen Träger wie zum Beispiel SiO₂ oder das PGSS-Verfahren (Particle from Gas Saturated Solutions).

Die Umsetzungen können in Gegenwart üblicher Katalysatoren, beispielsweise organischen Zinnverbindungen, wie Dibutylzinndilaurat, anderen organometallischen Verbindungen wie Eisenacetylacetonat, tertiären Aminen wie Triethylendiamin, Enzymen oder dergleichen durchgeführt werden.

Durch Variation der Substituenten der Formel (I), bezüglich deren Art, Mengenverhältnissen und/oder Molekulargewichten lassen sich die Eigenschaften der erfindungsgemäßen Additionsverbindungen an die unterschiedlichen Anwendungsgebiete anpassen. So können zum Beispiel die Löslichkeit und die Verträglichkeit auf die unterschiedlichsten Lösemittel, Trägermedien, Bindemittel, Harze, Feststoffe und gegebenenfalls weitere polymere Verbindungen abgestimmt werden, welche in Überzugs- und Formmassen vorliegen, in denen die erfindungsgemäßen Additionsverbindungen zur Anwendung kommen.

Für den Einsatz in hochpolaren Systemen wie beispielsweise Wasserlacken, sollten die Reste Y einen ausreichend hohen Anteil an polaren Gruppen wie beispielsweise Polyethylenoxiden enthalten um eine für den jeweiligen Einsatzbereich ausreichende Wasserlöslichkeit zu erreichen. Dieser Anteil an hydrophilen Gruppen sollte aber auch nicht zu hoch sein, wenn es dadurch in bestimmten Anwendungen zu einer nicht gewünschten Erhöhung der Wasserempfindlichkeit kommt.

Beim Einsatz in unpolaren Systemen wie Langölalkydlacken, PVC-Plastisolen oder Polyolefinen sollte vorzugsweise ein entsprechender Anteil an unpolaren Gruppen vorliegen und beim Einsatz in Systemen, bei denen eine breite Verträglichkeit wichtig ist, wie beispielsweise Pigmentkonzentraten, ist eine ausgewogene Kombination von polaren und unpolaren Gruppen von Vorteil.

Für die Dispergierung in Silikonölen wie zum Beispiel Dekamethylcyclopentasiloxan, zum Beispiel für kosmetische Zubereitungen, eignen sich besonders polydimethylsiloxanhaltige Additionsverbindungen. Wenn die Additionsverbindungen beispielsweise in einem Polyurethanharz oder in einem Lack, dessen Bindemittel ein Polyurethan ist, eingesetzt werden, ist es zweckmäßig, solche erfindungsgemäßen Additionsverbindungen einzusetzen, die in ihrem Molekül aufgrund der in den Ausgangsverbindungen der Formel (I) enthaltenen Gruppen auch Urethangruppen oder ähnliche Gruppen enthalten, die - wie dem Fachmann bekannt ist, mit Polyurethanen verträglich sind. Das gleiche gilt sinngemäß beispielsweise für Polyacrylate, Polyester, Alkydharze und andere Polymere.

Sinngemäß gilt dies für die Substituenten der Komponente (c), die von besonderem Einfluss auf die Affinität der erfindungsgemäßen Additionsverbindungen zu den verwendeten Feststoffen sind, die dispergiert werden sollen.

Erfindungsgemäße Additionsverbindungen mit oberflächenaktiven Substituenten, können die Oberflächenspannung der mit ihnen hergestellten Substrate verändern. Sind etwa sehr unpolare Gruppen wie zum Beispiel langkettige Alkylgruppen mit mehr als 12 Kohlenstoffatomen, polydimethylsiloxanhaltige und/oder perflouralkylhaltige Gruppen enthalten, eignen sich die Produkte, um die Oberflächenspannung von flüssigen organischen oder wässrigen oder von festen Systemen zu reduzieren, und die damit zusammenhängenden Eigenschaften wie zum Beispiel Benetzungseigenschaften, Anschmutzbarkeit, Bedruckbarkeit, Verlauf und Schaumverhalten zu beeinflussen. In Systemen, die eine Reaktivität mit OH-Gruppen, COOH-Gruppen und/oder Doppelbindungen aufweisen, beispielsweise 2-Komponenten-Systeme auf Isocyanat- oder Melaminharz-Basis, Epoxidhaltige Systeme, Strahlenhärtende Beschichtungen, wie UV- oder elektronenstrahlhärtende Lacke und Druckfarben oder ungesättigte Polyestersysteme, lässt sich durch Verwendung von erfindungsgemäßen Additionsverbindungen mit reaktiven Gruppen wie OH-Gruppen, COOH-Gruppen und/oder ungesättigten Gruppen eine Mitvernetzung erreichen, die zu Verbesserungen der Haftung, der Einbindung der Feststoffe, der mechanischen Eigenschaften und des Migrationsverhaltens führt. In Anwendungen, bei denen die Anwesenheit von Doppelbindungen, zum Beispiel durch hohe Verarbeitungstemperaturen, zu unerwünschten Nachteilen wie Verfärbungen führt, werden zweckmäßig erfindungsgemäße Additionsverbindungen mit möglichst wenig und bevorzugt gar keinen ungesättigten Gruppen eingesetzt.

Das zahlenmittlere Molekulargewicht Mₙ der erfindungsgemäßen Additionsverbindungen liegt vorzugsweise bei mindestens 500 g/mol, besonders bevorzugt bei mindestens 800 g/mol, ganz besonders bevorzugt bei mindestens 1200 g/mol und idealerweise bei mindestens 2000 g/mol.

Weiterer Gegenstand der Erfindung ist ein Verfahren zur Herstellung der erfindungsgemäßen Additionsverbindungen, wobei eine Umsetzung erfolgt von
(a) einem oder mehreren Polyisocyanaten mit mindestens zwei IsocyanatGruppen pro Molekül mit
(b) einer oder mehreren Verbindungen der Formel (I)

   Y-(XH)ₙ (I)

   wobei
   XH für eine gegenüber Isocyanaten reaktive Gruppe steht und
   Y für eine nicht gegenüber Isocyanaten reaktive, monomere oder polymere Gruppe steht, die keine tertiären Aminogruppen und keine hydrolysierbaren Silangruppen enthält, und die eine oder mehrere aliphatische, cycloaliphatische und/oder aromatische Gruppen umfasst, und wobei
   n für 1, 2 oder 3 steht,
   wobei die Verbindung der Formel (I) eine zahlenmittlere Molmasse Mₙ kleiner 20000 g/mol besitzt und keine Verbindung darstellt, die unter die Definition der Komponente (c2) fällt,
   und
   wobei für mindestens 50 Mol-% der Verbindungen der Formel (I) gilt, dass n = 1 ist,
   unter der Vorgabe, dass 20 % bis 90% der Isocyanatgruppen der Komponente (a) mit den Verbindungen der Formel (I) umgesetzt werden,
   und
(c) einer oder mehreren Verbindungen aus der Gruppe
   (c1) Verbindungen nach Formel (II)

      M-Q (II)

      worin
      M einen organischen Rest mit einer zahlenmittleren Molmasse von maximal 1000 g/mol darstellt, welcher
      i) mindestens eine tertiären Aminogruppe und mindestens eine Hydroxylgruppe
         oder
      ii) mindestens eine hydrolisierbare Silangruppe unter der Maßgabe enthält, dass für 100 % der Verbindung der allgemeinen Formel (I) n = 1 gilt. und
      Q für NH₂, OH oder NHR steht, worin R für eine lineare oder verzweigte Alkylgruppe mit 1 bis 18 Kohlenstoffatomen steht,
   (c2) einem Blockierungsmittel für Isocyanatgruppen ausgewählt aus der Gruppe bestehend aus Lactamen, Malonestem, Alkyacetoacetaten, Phenolen, Diisopropylamin, 1,2,4-Trizol und Imidazol, und
   (c3) optional Verbindungen der allgemeinen Formel (III)

      Z-Q (III)
   worin
   Z für einen organischen basischen Rest mit mindestens einer tertiären Aminogruppe steht, der keine NCO-reaktiven Gruppen enthält, und
   Q für NH2, OH oder NHR steht, worin R für eine lineare oder verzweigte Alkylgruppe mit 1 bis 18 Kohlenstoffatomen steht,
   wobei im Reaktionsprodukt aus (a), (b) und (c) gegebenenfalls vorliegenden Hydroxylgruppen gegebenenfalls mit Polycarbonsäuren mit mindestens zwei Carboxylgruppen oder deren Anhydriden in einer solchen Menge umgesetzt werden, dass auf jede umzusetzende Hydroxylgruppe mindestens 0,8 Moleküle der Polycarbonsäure oder des Polycarbonsäureanhydrids eingesetzt werden;
   unter der Maßgabe, dass mindestens 10 % der Isocyanatgruppen der Komponente (a) mit Komponente (c) umgesetzt werden und als Komponente (c) mindestens 5 mol% einer oder mehrere der Komponenten (c1) und/oder (c2) eingesetzt werden und dass 0 bis 50 % der isocyanatgruppen der Komponente (a) mit einer oder mehreren Komponenten (c3) umgesetzt werden.

Die im erfindungsgemäßen Verfahren eingesetzten Komponenten (a), (b) und (c) entsprechen den bereits weiter oben beschriebenen.

Bevorzugt ist es das erfindungsgemäße Verfahren so durchzuführen, dass zunächst die Verbindungen der Komponente (a) mit denen der Komponente (b) und erst anschließend die verbliebenen Isocyanatgruppen mit den Verbindungen der Komponente (c) zur Reaktion gebracht werden.

Es ist weiterhin vorteilhaft bei Verwendung von Verbindungen der Formel (I) mit n=1 und n=2 oder 3, die Polyisocyanate der Komponente (a) zunächst mit den Verbindungen der Formel (I) umzusetzen für die n=1 gilt und erst anschließend eine Umsetzung mit solchen Verbindungen der Formel (I) vorzunehmen für die n=2 oder 3 gilt.

Weiterer Gegenstand der Erfindung ist die Verwendung der vorstehend beschriebenen erfindungsgemäßen Additionsverbindungen als Netz- bzw. Dispergiermittel und als Dispersionsstabilisatoren.

Gegenstand der Erfindung sind auch in flüssige Systeme einzuarbeitende pulver- oder faserförmige Feststoffe, die mit diesen Additionsverbindungen als Dispergiermittel und als Dispersionsstabilisatoren oder als Netzmittel beschichtet sind.

Die erfindungsgemäßen Additionsverbindungen können anstelle der aus dem Stand der Technik bekannten Dispergiermittel, Dispersionsstabilisatoren oder Netzmittel eingesetzt werden. So können diese beispielsweise bei der Herstellung oder Verarbeitung von Lacken, Druckfarben, Tinten, beispielsweise für Tintenstrahldruck, Papierstrich, Leder- und Textilfarben, Pasten, Pigmentkonzentraten, Keramiken, und kosmetischen Zubereitungen eingesetzt werden, insbesondere, wenn diese Feststoffe wie Pigmente und/oder Füllstoffe enthalten. Auch bei der Herstellung oder Verarbeitung von Formmassen auf Basis von synthetischen, halbsynthetischen oder natürlichen makromolekularen Stoffen, wie zum Beispiel Polyvinylchlorid, gesättigten oder ungesättigten Polyestern, Polyurethanen, Polystyrolen, Polyacrylaten, Polyamiden, Epoxidharzen, Polyolefinen wie Polyethylen oder Polypropylen können sie eingesetzt werden. Beispielsweise lassen sich die Additionsverbindungen zur Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken, wobei Bindemittel und/oder Lösemittel, Pigmente und gegebenenfalls Füllstoffe, die Additionsverbindung und übliche Hilfsstoffe vermischt werden, verwenden.

Bevorzugt werden die Additionsverbindungen zur Herstellung von Pigmente und/oder Füllstoffe enthaltenden Pigmentkonzentraten, Lacken, Pasten und/oder Formmassen verwendet.

Beispiele für übliche Bindemittel sind Harze auf Basis von Polyurethanen, Cellulosenitraten, Celluloseacetobutyraten, Alkyden, Melaminen, Polyestern, Chlorkautschuken, Epoxiden und Acrylaten. Beispiele für Beschichtungen auf Wasserbasis sind kathodische oder anodische Elektrotauchlackierungen zum Beispiel für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen Additionsverbindungen eignen sich insbesondere auch zur Herstellung von Feststoffkonzentraten, wie zum Beispiel Pigmentkonzentraten. Dazu werden die erfindungsgemäßen Verbindungen in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den erfindungsgemäßen Additionsverbindungen ist es aber insbesondere möglich, stabile bindemittelfreie Pigmentkonzentrate herzustellen. Ebenso ist es möglich mit den erfindungsgemäßen Verbindungen fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäße Verbindung zugemischt und die so erhaltene Mischung dispergiert. Die auf verschiedenen Wegen hergestellten Feststoffkonzentrate können dann in unterschiedliche Substrate wie beispielsweise Alkydharze, Polyesterharze, Acrylatharze, Polyurethanharze oder Epoxidharze eingearbeitet werden. Pigmente können aber auch lösemittelfrei direkt in den erfindungsgemäßen Additionsverbindungen dispergiert werden, und eignen sich dann besonders zur Pigmentierung von thermoplastischen und duroplastischen Kunststoffformulierungen. Die erfindungsgemäßen Additionsverbindungen können vorteilhaft auch bei der Herstellung von Farbfiltern für Flüssigkristallanzeigen, -bildschirme, Farbauflösungsgeräte, Sensoren, Plasmabildschirmen, Anzeigen auf Basis der SED (Surface conduction Electron emitter Display) und für MLCC (Multi Layer Ceramic Compounds) verwendet werden. Die MLCC-Technologie wird bei der Herstellung von Mikrochips und Leiterplatten verwendet.

Die erfindungsgemäßen Additionsverbindungen können auch zur Herstellung kosmetischer Zubereitungen wie zum Beispiel Make-up, Puder, Lippenstifte, Haarfärbemittel, Cremes, Nagellacke und Sonnenschutzpräparaten verwendet werden. Diese können in den üblichen Formen wie beispielsweise als W/O- oder O/W-Emulsionen, Lösungen, Gele, Cremes, Lotionen oder Sprays vorliegen. Die erfindungsgemäßen Additionsverbindungen können vorteilhaft in zur Herstellung dieser Zubereitungen verwendeten Dispersionen eingesetzt werden. Diese können die für diese Zwecke in der Kosmetik üblichen Trägermedien, wie zum Beispiel Wasser, Ricinusöle oder Silikonöle und Feststoffe, wie zum Beispiel organische und anorganische Pigmente wie Titandioxid oder Eisenoxid enthalten.

Gegenstand der Erfindung ist des Weiteren auch die Verwendung einer erfindungsgemäßen Additionsverbindung zur Herstellung eines Pigmentlacks der insbesondere zur Herstellung eines pigmentierten Überzuges auf einem Substrat dient, wobei der Pigmentlack auf das Substrat aufgebracht wird und wobei der auf das Substrat aufgebrachte Pigmentlack eingebrannt oder ausgehärtet beziehungsweise vernetzt wird.

Die Dispergiermittel können alleine oder zusammen mit nach dem Stand der Technik üblichen Bindemitteln eingesetzt werden. Beim Einsatz in Polyolefinen kann es beispielsweise vorteilhaft sein, entsprechende niedermolekulare Polyolefine als Trägermaterialien zusammen mit dem Dispergiermittel einzusetzen.

Eine erfindungsgemäße Verwendung der Additionsverbindungen besteht auch in der Herstellung dispergierbarer pulverpartikel- und/oder faserpartikelförmiger Feststoffe, insbesondere dispergierbarer Pigmente oder Kunststofffüllstoffe, wobei die Partikel mit der erfindungsgemäßen Additionsverbindung beschichtet sind. Derartige Beschichtungen von organischen wie auch anorganischen Feststoffen werden in bekannter Weise ausgeführt, wie sie beispielsweise in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen beispielsweise durch Zusatz der erfindungsgemäßen Additionsprodukte zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke, gegenüber nicht behandelten Pigmenten aus.

Neben der oben beschriebenen Anwendung als Dispergiermittel und/oder Beschichtungsmittel für pulver- und faserförmige Feststoffe können die erfindungsgemäßen Additionsverbindungen auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in der DE-A-36 43007 beschrieben. Ein Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht verträglich mit den verwendeten ungesättigten Polyesterharzen und es kommt zur Separation der Komponenten. Bei Verwendung von PS-gefüllten SMC- oder BMC-Mischungen können die erfindungsgemäßen Additive aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Durch die erfindungsgemäßen Additionsverbindungen können in vielen Fällen, beispielsweise auch in unverträglichen Polyol-Mischungen, Polyol-Isocyanat-Mischungen oder Polyol-Treibmittelmischungen die zur Polyurethan-Herstellung verwendet werden, die aus dieser Unverträglichkeit resultierenden Separationsprobleme der Dispersionen, insbesondere Emulsionen ganz oder teilweise vermieden werden.

Die erfindungsgemäßen Additionsverbindungen werden in einer Menge von bevorzugt 0,01 bis 10 Gew.-% bezogen auf Gesamtmenge der Zubereitungen zugesetzt. Bezogen auf den zu dispergierenden Feststoff, werden sie in einer Menge von bevorzugt 0,5 bis 100 Gew.-% eingesetzt. Werden schwierig zu dispergierende Feststoffe verwendet, kann die Menge an eingesetzter erfindungsgemäßer Additionsverbindung durchaus höher sein. Die Menge an Dispergiermittel ist im Allgemeinen abhängig von der zu belegenden Oberfläche des zu dispergierenden Stoffes. Wird beispielsweise Titandioxid als Pigment verwendet, ist die Menge an Dispergiermittel geringer als im Fall von beispielsweise Ruß. Allgemein lässt sich sagen, dass zur Dispergierung anorganischer Pigmente weniger Dispergiermittel notwendig ist als für organische Pigmente, da letztere über eine höhere spezifische Oberfläche verfügen und von daher eine größere Menge an Dispergiermittel nötig ist. Typische Dosierungen für anorganische Pigmente liegen bei 1-10 Gew.-%, für organische Pigmente bei 10-30 Gew.-% (jeweils Wirksubstanz Additionsverbindung bezogen auf Pigment). Bei sehr feinteiligen Feststoffen, beispielsweise mit Teilchengrößen unter 100 nm, (z.B. einigen Rußen) sind auch Zugabemengen von 30-80 Gew.-% oder mehr nötig.

Als Kriterium für eine ausreichende Pigmentstabilisierung können beispielsweise Farbstärke, Glanz und Transparenz der Pigmentanreibung oder der Grad des Ausschwimmens (Rub-out Test) bei einer Weißabmischung herangezogen werden.

Die Dispergierung der Feststoffe kann als Einzelanreibung erfolgen oder auch als Gemischtanreibung mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen Additionsverbindungen häufig eine gleichnamige, in der Regel positive, Ladung aller Teilchen erreichen und damit Instabilitäten durch Ladungsunterschiede vermeiden. Ihre optimale Wirkung erzielen die Dispergiermittel bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die Additionsverbindungen auch nachträglich eingesetzt werden (als sogenannte "Post-Additive"), zum Beispiel um in einem fertig aufgelackten Ansatz Ausschwimm- oder Flockulationsprobleme zu lösen. In der Regel sind in diesem Fall aber erhöhte Additiv-Dosierungen erforderlich.

In einigen Fällen können die erfindungsgemäßen Additionsverbindungen einen mehr oder weniger ausgeprägten Einfluss auf die Rheologie des Systems ausüben. Sie können daher in solchen Fällen auch zur Rheologiekontrolle eingesetzt werden, gegebenenfalls in Kombination mit anderen rheologischen Additiven wie pyrogener Kieselsäure, Schichtsilikaten (Bentoniten), hydrierten Rizinusölen oder den Additiven BYK^{®}-410, BYK^{®}-420 und BYK^{®}-425 (BYK Chemie GmbH). Häufig sind hierbei synergistische Effekte zu beobachten. In vielen Fällen lassen sich auch die Korrosionsschutzeigenschaften von Beschichtungen durch den Einsatz der erfindungsgemäßen Additionsverbindungen verbessern.

Beispiele für pulver- oder faserförmige Feststoffe sind solche, die mit Dispergiermitteln beschichtet werden können, insbesondere organische und anorganische Pigmente, die in Anstrichmitteln, Überzugsmitteln, Formmassen oder sonstigen Kunststoffen eingesetzt werden, anorganische oder organische Füllstoffe, die zum Füllen oder Verstärken von Anstrichmitteln, Überzugsmitteln, Formmassen oder sonstigen Kunststoffen eingesetzt werden. Eine Untergruppe von derartigen Füllstoffen sind Fasern organischer und/oder anorganischer Natur, die ebenfalls als Füllstoffe oder Verstärkungsstoffe verwendet werden.

Beispiele für Pigmente sind Mono-, Di-, Tri- und Polyazopigmente, Oxazin-Pigmente, Dioxazin-Pigmente, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon-, Pyranthron-, Perylen- und andere polycyclische Carbonyl-Pigmente, anorganische Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Kobalt, Eisen, Chrom, Antimon, Magnesium, Aluminium (beispielsweise Nickeltitangelb, Bismutvanadat-molybdatgelb oder Chromtitangelb), magnetischen Pigmenten auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente. Alle vorgenannten Pigmente können oberflächenmodifiziert vorliegen und basische, saure oder neutrale Gruppen an der Oberfläche besitzen. Bevorzugt sind neutrale oder sauer modifizierte Pigmente, wie beispielsweise oxidierte Ruße.

Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydoxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, und dergleichen zur Herstellung solcher extrem feinteiliger Feststoffe heranziehen. Der Herstellprozess dieser oxidischen, hydoxidischen oder oxidhydroxidischen Teilchen kann über die unterschiedlichsten Verfahren wie beispielsweise lonenaustauschprozesse, Plasmaprozesse, Sol-Gel-Verfahren, Ausfällung, Zerkleinerung (beispielsweise durch Vermahlung) oder Flammhydrolyse und dergleichen erfolgen.

Beispiele für pulver- oder faserförmige Füllstoffe sind solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126. Auch Flammschutzmittel wie z.B. Aluminium- oder Magnesiumhydroxid und Mattierungsmittel wie z.B. Kieselsäuren lassen sich ebenfalls hervorragend dispergieren und stabilisieren.

Im Folgenden wird die vorliegende Erfindung durch nachstehende Beispiele zusätzlich erläutert.

### BEISPIELE

Bei molekular uneinheitlichen Substanzen stellen die angegebenen Molekulargewichte Durchschnittswerte des Zahlenmittels dar. Die Molekulargewichte beziehungsweise zahlenmittleren Molekulargewichte Mₙ werden bei Vorhandensein titrierbarer Hydroxy- oder Amino-Gruppen durch Endgruppenbestimmung über die Ermittlung der OH-Zahl beziehungsweise der Amin-Zahl bestimmt. Bei Verbindungen auf die eine Endgruppenbestimmung nicht anwendbar ist wird das zahlenmittlere Molekulargewicht mittels Gelpermeationschromatographie gegen einen Polystyrolstandard bestimmt.

Sofern nicht anders ausgeführt, handelt es sich bei Angaben in Teilen um Gewichtsteile und bei Angaben in Prozenten um Gewichtsprozente.

Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5, 1977.

Die Herstellung der hydroxyfunktionellen Caprolactonpolyester erfolgt wie zum Beispiel in der EP 158678 beschrieben.

### Herstellunsgsbeispiele

### Zwischenprodukte (Komponente (b))

### Zwischenprodukt A1

### Polyester aus iso-Decanol und epsilon-Caprolacton (Molverhältnis 1: 8,3)

Unter Schutzatmosphäre werden 144 Teile iso-Decanol und 857 Teile epsilon-Caprolacton homogenisiert, mit 0,04 Teilen Dibutylzinndilaurat (DBTL) versetzt und auf 180° C erhitzt. Man rührt etwa 4 Stunden bei dieser Temperatur, bis ein FK (Festkörpergehalt) von 98% erreicht ist. Das Produkt mit einer zahlenmittleren Molmasse Mₙ von etwa 1100 g/mol ist bei Raumtemperatur fest und hat eine OH-Zahl von 51 mg KOH/g.

### Zwischenprodukt A2

### Polyester aus n-Decanol und epsilon-Caprolacton (Molverhältnis 1: 8,3)

Unter Schutzatmosphäre werden 144 Teile n-Decanol und 857 Teile epsilon-Caprolacton homogenisiert, mit 0,02 Teilen DBTL versetzt und auf 170° C erhitzt. Man rührt etwa 6 Stunden bei dieser Temperatur, bis ein FK von 99% erreicht ist. Das Produkt mit einer zahlenmittleren Molmasse Mₙ von etwa 1100 g/mol ist bei Raumtemperatur fest und hat eine OH-Zahl von 51 mg KOH/g.

### Zwischenprodukt A3

### Polyester aus Methoxypolyethylenglykol mit einer mittleren Molmasse von 500 und epsilon-Caprolacton (Molverhältnis 1: 3)

Unter Schutzatmosphäre werden 58 Teile des Methoxypolyethylenglykols und 42 Teile epsilon-Caprolacton homogenisiert, mit 0,3 Teilen Dodecylbenzolsulfonsäure versetzt und auf 80° C erhitzt. Man rührt etwa 2 Stunden bei dieser Temperatur, bis ein Festkörpergehalt von 97% erreicht ist. Das Produkt mit einer zahlenmittleren Molmasse Mₙ von etwa 900 ist bei Raumtemperatur flüssig und hat eine OH-Zahl von 63 mg KOH/g.

### Zwischenprodukt A4

### Polyester aus 3-Aminopropyltriethoxysilan und epsilon-Caprolacton (Molverhältnis 1: 7,7)

Unter Schutzatmosphäre werden 200 Teile 3-Aminopropyltriethoxysilan und 793 Teile epsilon-Caprolacton homogenisiert, mit 0,02 Teilen DBTL versetzt und auf 160° C erhitzt. Man rührt etwa 10 Stunden dieser Temperatur, bis ein FK von 95% erreicht ist. Das Produkt mit einer zahlenmittleren Molmasse Mₙ von etwa 1100 g/mol ist bei Raumtemperatur wachsartig, gelblich und hat eine OH-Zahl von 51 mg KOH/g.

### Zwischenprodukt A5

### Polyester aus Monophenylglykol und epsilon-Caprolacton (Molverhältnis 1: 5,7)

Unter Schutzatmosphäre werden 178 Teile Monophenylglykol und 822 Teile epsilon-Caprolacton homogenisiert, mit 0,04 Teilen DBTL versetzt und auf 160° C erhitzt. Man rührt etwa 7 Stunden bei dieser Temperatur, bis ein FK von 98% erreicht ist. Das Produkt mit einer zahlenmittleren Molmasse Mₙ von etwa 800 g/mol ist bei Raumtemperatur fest und hat eine OH-Zahl von 70 mg KOH/g.

### Zwischenprodukt A6

### Polyester aus Oleylalkohol, epsilon-Caprolacton und delta-Valerolacton (Molverhältnis 1: 1,08: 1,08)

Unter Schutzatmosphäre werden 530 Teile Oleylalkohol, 248 Teile epsilon-Caprolacton und 218 Teile delta-Valerolacton homogenisiert. Es wird langsam auf 160° C erhitzt und dann mit 0,02 Teilen DBTL versetzt. Man rührt etwa 7 Stunden bei dieser Temperatur, versetzt abermals mit DBTL (0,01 Teile), und rührt noch 5 Stunden, bis ein FK von 96% erreicht ist. Das Produkt mit einer zahlenmittleren Molmasse Mₙ von etwa 500 g/mol ist bei Raumtemperatur flüssig und hat eine OH-Zahl von 115 mg KOH/g.

### Zwischenprodukt A7

### Polyester aus Butoxypolypropylenglykol (mit einer mittleren Molmasse von ca.700), epsilon-Caprolacton und delta-Valerolacton (Molverhältnis 1: 10,5: 10,5)

Unter Schutzatmosphäre werden 250 Teile Butoxypolypropylenglykol, 428 Teile epsilon-Caprolacton und 375 Teile delta-Valerolacton homogenisiert, mit 0,04 Teilen DBTL versetzt und auf 160° C erhitzt. Man rührt etwa 11 Stunden bei dieser Temperatur, bis ein FK von 98% erreicht ist. Das Produkt mit einer zahlenmittleren Molmasse Mₙ von etwa 3000 g/mol ist bei Raumtemperatur fest und hat eine OH-Zahl von 19 mg KOH/g.

### Endprodukte

### Beispiel 1

28,1 Teile Polyisocyanat P1 werden mit 35,3 Teilen des Zwischenproduktes A1 und 34 Teilen PMA (Methoxypropylacetat) homogenisiert. Unter Schutzgas wird auf 80°C erhitzt und 0,003 Teile DBTL (Dibutyzinndilaurat) zugegeben. Es wird etwa 1 Stunde bei dieser Temperatur gerührt bis 60% der eingesetzten NCO-Gruppen umgesetzt sind. Dann werden 2,4 Teile Caprolactam zugegeben und weiter bei 80°C gerührt, bis sämtliche NCO-Gruppen abreagiert sind. Das Produkt ist mittelviskos und hat einen Festkörpergehalt von 52%.

### Beispiel 2

Analog zu Beispiel 1 werden statt Caprolactam 1,45 Teile Imidazol eingesetzt. Der Festkörpergehalt beträgt 52%. Die Aminzahl beträgt 12 mg KOH/g.

### Beispiel 3 (nicht erfindungsgemäss)

Analog zu Beispiel 1 werden statt Caprolactam 1,9 Teile 2-Butanonoxim eingesetzt. Der Festkörpergehalt beträgt 52%.

### Beispiel 4 (nicht erfindungsgemäss)

Analog zu Beispiel 1 werden statt Caprolactam 2,1 Teile 3,5-Dimethylpyrazol eingesetzt. Der Festkörpergehalt beträgt 52%.

### Beispiel 5

Analog zu Beispiel 1 werden statt Caprolactam 1,03 Teile 3,5-Dimethylpyrazol eingesetzt. Nachdem es abreagiert hat, werden 1,36 Teile API (Aminopropylimidazol) zugegeben. Der Festkörpergehalt beträgt 52%. Die Aminzahl beträgt 6 mg KOH/g.

### Beispiel 6 (nicht erfindungsgemäss)

Analog zu Beispiel 1 werden statt Caprolactam 0,93 Teile 2-Butanonoxim eingesetzt. Nachdem es abreagiert ist, werden 1,36 Teile API zugegeben. Der Festkörpergehalt beträgt 52%. Die Aminzahl beträgt 6 mg KOH/g.

### Beispiel 7

Analog zu Beispiel 1 werden statt Caprolactam 0,73 Teile Imidazol eingesetzt. Nachdem es abreagiert ist, werden 1,35 Teile API zugegeben. Der Festkörpergehalt beträgt 52%. Die Aminzahl beträgt 12 mg KOH/g.

### Beispiel 8

Analog zu Beispiel 1 werden statt 2,4 Teile Caprolactam 1,2 Teile Caprolactam eingesetzt. Nachdem es abreagiert ist, werden 1,35 Teile API zugegeben. Der Festkörpergehalt beträgt 52%. Die Aminzahl beträgt 6 mg KOH/g.

### Beispiele 9

Analog zu Beispiel 1 werden statt Caprolactam 3,2 Teile Triethanolamin eingesetzt. Das Produkt ist mittelviskos. Der Festkörpergehalt beträgt 52%. Die Aminzahl beträgt 10 mg KOH/g und die OH-Zahl beträgt 27 mg KOH/g.

### Beispiel 10

Analog zu Beispiel 1 werden statt Caprolactam 2,5 Teile N-Methyldiethanolamin eingesetzt. Das Produkt ist mittelviskos. Der Festkörpergehalt beträgt 52%. Die Aminzahl beträgt 12 mg KOH/g.

### Beispiel 11

Analog zu Beispiel 1 werden statt Caprolactam 2,8 Teile Aminopropylmethylethanolamin eingesetzt. Das Produkt ist hochviskos. Der Festkörpergehalt beträgt 52%. Die Aminzahl beträgt 13 mg KOH/g und die OH-Zahl beträgt 12 mg KOH/g.

### Beispiel 12

Analog zu Beispiel 1 werden statt Caprolactam 2,3 Teile Tris-2-hydroxyethyl-isocyanurat und 1,1 Teile Triethanolamin in 11,2 Teilen NMP eingesetzt. Das Produkt ist mittelviskos. Der Festkörpergehalt beträgt 49%.

### Beispiel 13

Analog zu Beispiel 1 werden statt Caprolactam 3,1 Teile 3-(Diethylamino)propan-1,2-diol eingesetzt. Das Produkt ist hochviskos. Der Festkörpergehalt beträgt 52%.

### Beispiel 14

Analog zu Beispiel 1 werden statt Caprolactam 2,1 Teile Triethanolamin eingesetzt. Das Produkt ist hochviskos. Der Festkörpergehalt beträgt 52%. Die Aminzahl beträgt 7 mg KOH/g.

### Beispiel 15

15,7 Teile Polyisocyanat P1 werden mit 9,9 Teilen des Zwischenproduktes A1 und 45,3 Teilen PMA homogenisiert. Unter Schutzgas wird auf 60°C erhitzt und 0,001 Teile DBTL zugegeben. Nach ca. einer Stunde sind 30% der eingesetzten NCO-Gruppen umgesetzt. Dann werden 3,15 Teile eines Polyethylenglykols (Mₙ=1000 g/mol) zugegeben. Bei 60°C wird weiter gerührt, bis weitere 21% der eingesetzten NCO-Gruppen umgesetzt sind. Dann werden 0,5 Teile Imidazol und 15 Minuten später 0,93 Teile API sowie 24,5 Teile N-Methylpyrrolidon zugegeben und weiter bei 80°C gerührt, bis die restlichen NCO-Gruppen abreagiert sind. Das Produkt besitzt eine Aminzahl von 8 mg KOH/g und einen Festkörper von 22,5%.

### Beispiel 16 (nicht erfindungsgemäss)

15,7 Teile Polyisocyanat P1 werden mit 9,9 Teilen des Zwischenproduktes A1 und 45,3 Teilen PMA homogenisiert. Unter Schutzgas wird auf 60°C erhitzt und 0,001 Teile DBTL zugegeben. Nach ca. einer Stunde sind 30% der eingesetzten NCO-Gruppen umgesetzt. Dann werden 3,15 Teile eines Polyethylenglykols (Mₙ=1000 g/mol) zugegeben. Bei 60°C wird weiter gerührt, bis weitere 21% der eingesetzten NCO-Gruppen umgesetzt sind. Dann wird mit 1,40 Teilen 3,5-Dimethylpyrazol versetzt und bei 90°C gerührt, bis die restlichen NCO-Gruppen abreagiert sind. Der Festkörpergehalt beträgt 30%.

### Beispiel 17

21,5 Teile Polyisocyanat P1 werden mit 14 Teilen des Zwischenproduktes A1, 13 Teilen des Zwischenproduktes A4 und 26,4 Teilen PMA homogenisiert. Unter Schutzgas wird auf 60°C erhitzt und 0,001 Teile DBTL zugegeben. Nach 0,75 Stunden sind 60% der eingesetzten NCO-Gruppen umgesetzt. Dann wird mit 1,2 Teilen epsilon-Caprolactam, 1 Teil API sowie 23,1 Teilen PMA versetzt und bei 80°C gerührt, bis die restlichen NCO-Gruppen abreagiert sind. Der Festkörpergehalt beträgt 40%.

### Beispiel 18

15,7 Teile Polyisocyanat P1 werden mit 9,9 Teilen des Zwischenproduktes A2 und 45,3 Teilen PMA homogenisiert. Unter Schutzgas wird auf 60°C erhitzt und 0,001 Teile DBTL zugegeben. Nach einer Stunde sind 30% der eingesetzten NCO-Gruppen umgesetzt. Dann werden 3,15 Teile eines Polyethylenglykols (Mₙ=1000 g/mol) zugegeben. Bei 60°C wird weiter gerührt, bis weitere 21% der eingesetzten NCO-Gruppen umgesetzt sind. Dann wird mit 2,18 Teilen Triethanolamin versetzt und bei 80°C gerührt, bis die restlichen NCO-Gruppen abreagiert sind. Das Produkt ist niedrigviskos, besitzt einen Festkörpergehalt von 30,5% und eine Aminzahl von 10 mg KOH/g.

### Beispiel 19

29,6 Teile Polyisocyanat P1 versetzt mit 0,001 Teilen DBTL werden auf 80°C erhitzt und über eine Stunde langsam mit 11,9 Teilen Polypropylenglykolmonobutylether (Mₙ=700 g/mol) versetzt. Anschließend werden zügig 12,7 Teilen Polyethylenglykolmonomethylether (Mₙ=750 g/mol) und 25,2 Teile PMA zugegeben. Nachdem 60% der eingesetzten NCO-Gruppen abreagiert sind, werden 3,4 Teile Triethanolamin zugegeben. Nachdem die restlichen NCO-Gruppen abreagiert sind, wird mit 17,4 Teilen Dipropylenglykolmonomethylether (DPM) verdünnt. Das Produkt ist mittelviskos, besitzt einen Festkörpergehalt von 43% und eine Aminzahl von 11 mg KOH/g.

### Beispiel 20

19,5 Teile Polyisocyanat P1 werden mit 12,3 Teilen des Zwischenproduktes A2 und 60,4 Teilen PMA homogenisiert. Unter Schutzgas wird auf 60°C erhitzt und 0,002 Teile DBTL zugegeben. Nach 2,5 Stunden sind 30% der eingesetzten NCO-Gruppen umgesetzt. Dann werden 5,6 Teile eines Polyethylenglykols (Mₙ=1000 g/mol) zugegeben. Bei 70°C wird weiter gerührt, bis weitere 30% der eingesetzten NCO-Gruppen umgesetzt sind. Dann wird mit 2,2 Teilen Triethanolamin versetzt und bei 80°C gerührt, bis die restlichen 40% der eingesetzten NCO-Gruppen abreagiert sind. Das Produkt ist niedrigviskos, besitzt einen Festkörpergehalt von 30%, eine Aminzahl von 8 mg KOH/g und eine OH-Zahl von 21 mg KOH/g.

### Beispiel 21

24 Teile Polyisocyanat P1 werden mit 20 Teilen des Zwischenproduktes A2 sowie 26 Teilen PMA und 24,4 Teilen Xylol homogenisiert. Unter Schutzgas wird auf 65°C erhitzt und 0,002 Teile DBTL zugegeben. Nach einer Stunde sind 40% der eingesetzten NCO-Gruppen umgesetzt. Dann werden 2,46 Teile eines Polyethylenglykols (Mₙ=1000 g/mol) zugegeben. Bei 65°C wird weiter gerührt, bis weitere 11 % der eingesetzten NCO-Gruppen umgesetzt sind. Dann wird mit 3,37 Teilen Triethanolamin versetzt und bei 70°C gerührt, bis die restlichen NCO-Gruppen abreagiert sind. Das Produkt ist niedrigviskos, besitzt einen Festkörpergehalt von 38%, eine Aminzahl von 11 mg KOH/g und eine OH-Zahl von 28 mg KOH/g.

### Beispiel 22

12,9 Teile Polyisocyanat P2 werden mit 24,6 Teilen des Zwischenproduktes A1 und 48 Teilen PMA homogenisiert. Unter Schutzgas wird auf 60°C erhitzt und 0,001 Teile DBTL zugegeben. Nach 1,5 Stunden sind ein Drittel der eingesetzten NCO-Gruppen umgesetzt. Dann werden 11,2 Teile eines Polyethylenglykols (Mₙ=1000 g/mol) zugegeben. Bei 70°C wird weiter gerührt, bis ein weiteres Drittel der eingesetzten NCO-Gruppen umgesetzt ist. Dann wird mit 3,3 Teilen Triethanolamin versetzt und bei 70°C gerührt, bis die restlichen NCO-Gruppen abreagiert sind. Das Produkt ist mittelviskos, besitzt einen Festkörpergehalt von 52%, eine Aminzahl von 11 mg KOH/g und eine OH-Zahl von 31 mg KOH/g.

### Beispiel 23

28,5 Teile Polyisocyanat P3 werden mit 14,7 Teilen des Zwischenproduktes A3, 12,2 Teilen Methoxypolyethylenglykol (Mₙ=750) und 2,2 Teilen Ethylacetat homogenisiert. Unter Schutzgas wird auf 80°C erhitzt und 0,002 Teile DBTL zugegeben. Nach zwei Stunden sind 60% der eingesetzten NCO-Gruppen umgesetzt. Dann werden 1,5 Teile Imidazol zugegeben und solange bei 80°C gerührt, bis die restlichen 40% der eingesetzten NCO-Gruppen abreagiert sind. Dann werden 13,2 Teile 1,2-Propylenglykol zugegeben und 16,2 Teile Ethylacetat schonend über Vakuum abdestilliert. Anschließend wird noch mit 26,4 Teilen DPM verdünnt. Das Produkt ist hochviskos, besitzt einen Festkörpergehalt von 52% und eine Aminzahl von 15 mg KOH/g.

### Beispiel 24

1000 Teile Beispiel 9 werden mit 23 Teilen Maleinsäureanhydrid (MSA) versetzt. Beim Aufheizen unter Schutzgas löst sich das MSA. Es wird 4 Stunden bei 80°C gerührt. Dann werden 21 Teile PMA zugegeben und abgekühlt. Das Endprodukt besitzt einen Festkörpergehalt von 52%, eine Säurezahl von 13 mg KOH/g, eine Aminzahl von 10 mg KOH/g und eine OH-Zahl von 13 mg KOH/g.

### Beispiel 25 (nicht erfindungsgemäßes Vergleichsbeispiel)

Analog zu Beispiel 1 werden statt Caprolactam 2,55 Teile N,N-Diethylethanolamin eingesetzt. Der Festkörpergehalt beträgt 52%.

### Beispiel 26

28,1 Teile Polyisocyanat P1 werden mit 22,8 Teilen Zwischenprodukt A5, 12,5 Teilen A7 und 34 Teilen PMA homogenisiert. Unter Schutzgas wird auf 80°C erhitzt und 0,003 Teile DBTL zugegeben. Es wird etwa 1 Stunde bei dieser Temperatur gerührt, bis 60% der eingesetzten NCO-Gruppen umgesetzt sind. Dann wird eine Mischung aus 1,5 Teilen N,N-Dimethylaminopropan und 2 Teilen Triethanolamin zugegeben und weiter bei 80°C gerührt, bis sämtliche NCO-Gruppen abreagiert sind. Das Produkt besitzt einen Festkörpergehalt von 52%.

### Beispiel 27

Zu 29,6 Teilen Polyisocyanat P1, 25,2 Teilen PMA und 0,001 Teilen DBTL werden bei 80°C über eine Stunde langsam mit 24 Teile Polypropylenglykolmonobutylether (Mn=700) zugetropft. Nachdem 60% der eingesetzten NCO-Gruppen abreagiert sind, werden 3,4 Teile Triethanolamin zugegeben. Nachdem die restlichen NCO-Gruppen abregiert sind, wird mit 17,4 Teilen Dipropylenglykolmonomethylether (DPM) verdünnt. Das Produkt ist mittelviskos, besitzt einen Festkörpergehalt von 43% und eine Aminzahl von 11 mg KOH/g.

### Beispiel 28

15,7 Teile Polyisocyanat P1 werden mit 9,9 Teilen des Zwischenproduktes A2, 3,2 Teilen Zwischenprodukt A6 und 45,3 Teilen PMA homogenisiert. Unter Schutzgas wird auf 60°C erhitzt und 0,001 Teile DBTL zugegeben. Nachdem 50% der eingesetzten NCO-Gruppen umgesetzt sind, wird mit 2,6 Teilen 3-Aminopropyltrimethoxysilan versetzt und weiter bei 60°C gerührt, bis die restlichen NCO-Gruppen abreagiert sind. Der Festkörpergehalt beträgt 30%.

### Beispiel 29

15,7 Teile Polyisocyanat P1 werden mit 5 Teilen des Zwischenproduktes A2, 4,5 Teilen Polyethylenglykolmonomethacrylat (Mn= 350, OH-Zahl 160 mg/g KOH), 0,001 Teilen DBTL und 45 Teilen PMA homogenisiert und auf 60°C erhitzt. Nachdem 50% der eingesetzten NCO-Gruppen umgesetzt sind, wird mit 3,2 Teilen 3-Aminopropyltriethoxysilan versetzt und weiter bei 60°C gerührt, bis die restlichen NCO-Gruppen abreagiert sind. Der Festkörpergehalt beträgt 30%.

### Legende:

P1 =Aromatisches TDI-Polyisocyanurat mit einem freien NCO-Gehalt von 8,0% als 51 %ige Lösung in Butylacetat, z.B. Desmodur ®IL, Bayer AG
P2 =Aliphatisches Polyisocyanat (HDI-Trimerisat) mit einem freien NCO-Gehalt von 21,8%, z.B. Desmodur ® N3300, Bayer AG
P3 =Aromatisches TDI-Polyisocyanurat mit einem freien NCO-Gehalt von 8,0%; als 51%ige Lösung in Ethylacetat, z.B. Desmodur ® IL EA, Bayer AG

### Verwendungsbeispiele

### Haftungstest mit einem Alkyd-Melamin-Klarlack

| **Klarlack:** | |
|---|---|
| Alkydharz, 70%ig in Solventnaphta ; z.B.: Hersteller Vianova, Vialkyd AC 451 | 56 Teile |
| Melaminharz , 55%ig in n-Butanol/i-Butanol; z.B..: Casella, Maprenal MF 600 | 34 Teile |
| Solventnaphtha | 10 Teile |
| | 100 Teile |

### Zugabemenge des Beispiels: 2% Feststoff bezogen auf die Gesamtformulierung

### Applikation: 100µm nass auf Stahlblech

### Trocknung: 10 min RT / 20 min 140°C Umlufttrockenschrank

| **Probe** | **Prüfung** | | |
|---|---|---|---|
| | Pendelhärte | Xyloltest | Gitterschnitt |
| Beispiel 25 | 112 | 2 | GT5 |
| Beispiel 2 | 113 | 0 | GT0 |
| Beispiel 4 | 118 | 0 | GT1 |

| | |
|---|---|
| Pendelhärte | Pendelhärte nach König |
| Gitterschnitt | Gitterschnittmehrschneidenmesser Beurteilung nach DIN EN ISO 2431 |
| Xyloltest: | 1ml Xylol (im Zellstoffknäuel) 24 Std. unter Glas einwirken lassen |
| Benotung: | 0 = Lackschicht unbeschädigt (evtl. einige "Pickelchen") |
| | 1 = leichte Beschädigungen (teilweises Anquellen und Abplatzen der belasteten Lackschicht) |
| | 2 = starke Beschädigungen (kompl. Anquellen und Abplatzen der belasteten Lackschicht) |

### Verwendung im Paste system

### Klarlack ( Alkyd / Melamin ):

| | |
|---|---|
| Alkydharz, 60%ig in Solventnaphta; z.B.: Hersteller Vianova, Vialkyd AC 451 | 74,0 Teile |
| Melaminharz, 55%ig in n-Butanol/i-Butanol; z.B.: Casella, Maprenal MF 800, | 20,2 Teile |
| Butanol | 0,8 Teile |
| Solventnaphta | 4,5 Teile |
| BYK 066; Entschäumer, Hersteller Byk-Chemie GmbH | 0,3 Teile |
| BYK 310; polyestermodifiziertes Polydimethylsiloxan, Byk-Chemie GmbH | 0,2 Teile |
| | 100,0 Teile |

### Pigmentpaste mit Bayferroxrot 130M:

| | |
|---|---|
| Laropal A81 (Aldehydharz, BASF), 65%ig in PMA | 25,0 Teile |
| PMA (Methoxypropylacetat) | 3,0 Teile |
| Erfindungsgemäße Additionsverbindung | 11,5 Teile |
| Eisenoxidrot, z.B. Bayferroxrot 130M | 60,0 Teile |
| Kieselsäure, z.B. Aerosil 200 | 0,5 Teile |
| | 100,0 Teile |

| | |
|---|---|
| Dispergierung: Dispermat CV / 40min 18000 U/min / 40°C / 1mm Perlen 1:1 | |

### Pigmentpaste mit Novopermrot F3RK70:

| | |
|---|---|
| Laropal A81, 65%ig in PMA | 26,0 Teile |
| PMA | 14,8 Teile |
| Erfindungsgemäße Additionsverbindung | 19,2 Teile |
| Pigment Red 170, z.B. Novopermrot F3RK70 | 40,0 Teile |
| | 100,0 Teile |

| | |
|---|---|
| Dispergierung: Dispermat CV / 40min / 10000 U/min 140°C / 1mm Perlen 1:1 | |

### Pigmentpaste mit Kronos 2160

| | |
|---|---|
| Laropal A81, 65%ig in PMA | 22,0 Teile |
| PMA | 10,1 Teile |
| Erfindungsgemäße Additionsverbindung | 2,6 Teile |
| Aerosil 200 | 0,3 Teile |
| Titandioxid, z.B. Kronos 2160 | 65,0 Teile |
| | 100,0 Teile |

| | |
|---|---|
| Dispergierung: Dispermat CV / 30min / 8000 U/min / 40°C / 1mm Perlen 1:1 | |

### Pigmentpaste mit Spezialschwarz 4:

| | |
|---|---|
| Laropal A 81 65%ig in PMA | 23,50 Teile |
| PMA | 22,90 Teile |
| Erfindungsgemäße Additionsverbindung | 19,60 Teile |
| Ruß, z.B. Spezialschwarz 4 (Degussa AG) | 34,00 Teile |
| + 10% PMA | 100,00Teile |

| | |
|---|---|
| Dispergierung: Dispermat CV/ 60 min./ 10000 U/min / 40°C / 1mm Perlen 1:1 | |

### a) Volltonabmischung der Pigmentpaste Bayferroxrot 130 M, hergestellt mit den Beispielen 25, 3, 4 und 9.

Volltonabmischung der Bayferroxrot 130 M-Paste: (Mischen im Rüttler / 10 Minuten bei RT)

| | |
|---|---|
| Klarlack | 27,6 Teile |
| Pigmentpaste 130 M | 2,4 Teile |
| Gesamt: | 30,0 Teile |

| | |
|---|---|
| Applikation: 100µm auf Stahlblech Trocknung: 20 min RT, 25 min 140°C Lacktrockenschrank | |

### Bewertung des Gitterschnitts:

| Additiv: | Gitterschnitt: |
|---|---|
| Beispiel 25 | GT 2 |
| Beispiel 3 | GT 1 |
| Beispiel 4 | GT 1 |
| Beispiel 9 | GT 1 |

### b) Pigmentpaste Spezialschwarz 4, hergestellt mit den Beispielen 25 und 24

Bewertung der Pastenviskosität -visuell-:

| Additiv: | Bewertung: |
|---|---|
| Beispiel 25 | 2-3 |
| Beispiel 24 | 1 |

### Benotung: 1 = niedrigviskos, 3 = mittelviskos, 5 = pastös

Volltonabmischung der Pigmentpaste Spezialschwarz 4, hergestellt mit den Beispielen 25 und 24(Mischen im Rüttler / 10 Minuten bei RT):

| | |
|---|---|
| Klarlack | 28 Teile |
| Spezialschwarz 4-Paste | 2 Teile |
| Gesamt: | 30 Teile |

| | |
|---|---|
| Applikation: 100µm auf Stahlblech Trocknung: 20 min RT, 25 min 140°C Lacktrockenschrank | |

### Bewertung des Gitterschnitts:

| Additiv: | Gitterschnitt: |
|---|---|
| Beispiel 25 | GT 4 |
| Beispiel 24 | GT 0-1 |

### c) Weißabmischung der Pigmentpaste Novopermrot F3RK70, hergestellt mit den Beispielen 25, 5, 6, 7 und 9

Weißabmischung der Novopermrot F3RK70-Paste: (Mischen im Rüttler / 10 Minuten bei RT)

| | |
|---|---|
| Klarlack | 19,8 Teile |
| Weißpaste TiO2 Kronos 2160 | 9,2 Teile |
| Novopermrot-Paste | 1,0 Teile |
| Gesamt: | 30,0 Teile |

| | |
|---|---|
| Applikation: Aufgießen auf PE-Folie Trocknung: 20 min RT, 25 min 140°C Lacktrockenschrank | |

### Bewertung Delta-E von Rub-Out und von Glanz und Schleifer

| Additiv: | Rub-Out (DE): | Glanz: | Schleier: |
|---|---|---|---|
| Beispiel 25 | 1,04 | 76 | 38 |
| Beispiel 5 | 0,73 | 76 | 39 |
| Beispiel 6 | 0,51 | 77 | 37 |
| Beispiel 7 | 0,69 | 77 | 34 |
| Beispiel 9 | 0,57 | 77 | 35 |

## Patentansprüche

1. Additionsverbindungen und deren Salze, **dadurch gekennzeichnet, dass** die Additionsverbindungen erhältlich sind durch die Umsetzung von
(a) einem oder mehreren Polyisocyanaten mit mindestens zwei IsocyanatGruppen pro Molekül mit
(b) einer oder mehreren Verbindungen der Formel (I)
Y-(XH)ₙ (I)
wobei
XH für eine gegenüber Isocyanaten reaktive Gruppe steht und
Y für eine nicht gegenüber Isocyanaten reaktive, monomere oder polymere Gruppe steht, die keine tertiären Aminogruppen und keine hydrolysierbaren Silangruppen enthält, und die eine oder mehrere aliphatische, cycloaliphatische und/oder aromatische Gruppen umfasst,
und wobei
n für 1, 2 oder 3 steht,
wobei die Verbindung der Formel (I) eine zahlenmittlere Molmasse Mₙ kleiner 20000 g/mol besitzt und keine Verbindung darstellt, die unter die Definition der Komponente (c2) fällt,
und
wobei für mindestens 50 Mol-% der Verbindungen der Formel (I) gilt, dass n = 1 ist,
unter der Vorgabe, dass 20 % bis 90% der Isocyanatgruppen der Komponente (a) mit den Verbindungen der Formel (I) umgesetzt werden,
und
(c) einer oder mehreren Verbindungen aus der Gruppe bestehend aus
(c1) Verbindungen nach Formel (II)
M-Q (II)
worin
M einen organischen Rest mit einer zahlenmittleren Molmasse von maximal 1000 g/mol darstellt, welcher i) mindestens eine tertiären Aminogruppe und mindestens eine Hydroxylgruppe oder
ii) mindestens eine hydrolisierbare Silangruppe unter der Maßgabe enthält, dass für 100 % der Verbindung der allgemeinen Formel (I) n = 1 gilt, und
Q für NH₂, OH oder NHR steht, worin R für eine lineare oder verzweigte Alkylgruppe mit 1 bis 18 Kohlenstoffatomen steht,
(c2) einem Blockierungsmittel für Isocyanatgruppen ausgewählt aus der Gruppe bestehend aus Lactamen, Malonestern, Alkyacetoacetaten, Phenolen, Diisopropylamin. 1,2,4-Trizol und Imidazol, und
(c3) optional Verbindungen der allgemeinen Formel (III)
Z-Q (III)
worin
Z für einen organischen basischen Rest mit mindestens einer tertiären Aminogruppe steht, der keine NCO-reaktiven Gruppen enthält, und
Q für NH₂, OH oder NHR steht, worin R für eine lineare oder verzweigte Alkylgruppe mit 1 bis 18 Kohlenstoffatomen steht,
wobei im Reaktionsprodukt aus (a), (b) und (c) gegebenenfalls vorliegende Hydroxylgruppen gegebenenfalls mit Polycarbonsäuren mit mindestens zwei Carboxylgruppen oder deren Anhydriden in einer solchen Menge umgesetzt werden, dass auf jede umzusetzende Hydroxylgruppe mindestens 0,8 Moleküle der Polycarbonsäure oder des Polycarbonsäureanhydrids eingesetzt werden;
unter der Maßgabe, dass mindestens 10% der Isocyanatgruppen der Komponente (a) mit Komponente (c) umgesetzt werden und als Komponente (c) mindestens 5 mol% einer oder mehrere der Komponenten (c1) und/oder (c2) eingesetzt werden und dass 0 bis 50 % der Isocyanatgruppen der Komponente (a) mit einer oder mehreren Komponenten (c3) umgesetzt werden.

2. Additionsverbindungen nach Anspruch 1, wobei Y gegebenenfalls die Heteroatome O, S , Si und/oder N und/oder Ether-, Urethan-, Carbonat-, Amid-, Siloxan- und/oder Estergruppen enthält, und gegebenenfalls Wasserstoff gegen Halogen substituiert ist.

3. Additionsverbindungen nach Anspruch 1 oder 2, wobei Z eine oder mehrere der folgenden Bedeutungen hat: A) eine aliphatische und/oder cycloaliphatische Gruppe mit mindestens einer tertiären Aminogruppe oder B) eine heterocyclische Gruppe mit mindestens einem basischen Ringstickstoffatom, das kein Wasserstoffatom enthält, wobei die heterocyclische Gruppe über eine organische Kopplungsgruppe an die Gruppe Q gebunden sein kann.

4. Additionsverbindungen nach einem oder mehreren der Ansprüche 1 bis 3, wobei mindestens zwei verschiedene Verbindungen der Formel (I) eingesetzt werden.

5. Additionsverbindungen und deren Salze nach einem oder mehreren der Ansprüche 1 bis 4, **dadurch gekennzeichnet, dass** die monofunktionellen Verbindungen der Formel (I) monohydroxyfunktionelle Polyether, Polyester, Polyether-Polyester und/oder aliphatische und/oder cycloallphatische Monoalkohole mit 2 bis 30 Kohlenstoffatomen, deren Wasserstoffatome teilweise durch Halogen und/oder Arylreste ersetzt sein können, sind.

6. Additionsverbindungen nach einem oder mehreren der Ansprüche 1 bis 5, **dadurch gekennzeichnet, dass** als polyfunktionelle Verbindungen der Formel (I) di- oder trihydroxyfunktionelle Polyether, Polyester oder Polyether-Polyester eingesetzt werden.

7. Addidonsverbindungen nach einem oder mehreren der Ansprüche 1 bis 6, **dadurch gekennzeichnet, dass** sie keine ungesättigten Gruppen enthalten.

8. Additionsverbindungen nach einem oder mehreren der Ansprüche 1 bis 7, **dadurch gekennzeichnet, dass** es sich bei den Polyisocyanaten um Trimensierungsprodukte von Diisocyanaten auf Basis Hexamethytendlisocyanat, lsophorondiisocyanat und/oder Toluylendiisocyanat handelt.

9. Verfahren zur Herstellung der Additionsverbindungen nach einem oder mehreren der Ansprüche 1 bis 8, wobei eine Umsetzung erfolgt von
(a) einem oder mehreren Polyisocyanaten mit mindestens zwei IsocyanatGruppen pro Molekül mit
(b) einer oder mehreren Verbindungen der Formel (I)
Y-(XH)ₙ (I)
wobei
XH für eine gegenüber Isocyanaten reaktive Gruppe steht und
Y für eine nicht gegenüber Isocyanaten reaktive, monomere oder polymere Gruppe steht, die keine tertiären Aminogruppen und keine hydrolysierbaren Silangruppen enthält, und die eine oder mehrere aliphatische, cycloaliphatische und/oder aromatische Gruppen umfasst,
und wobei
n für 1, 2 oder 3 steht,
wobei die Verbindung der Formel (l) eine zahlenmittlere Molmasse Mₙ kleiner 20000 g/mol besitzt und keine Verbindung darstellt, die unter die Definition der Komponente (c2) fällt,
und
wobei für mindestens 50 Mol-% der Verbindungen der Formel (I) gilt, dass n = 1 ist,
unter der Vorgabe, dass 20 % bis 90% der Isocyanatgruppen der Komponente (a) mit den Verbindungen der Formel (I) umgesetzt werden,
und
(c) einer oder mehreren Verbindungen aus der Gruppe bestehend aus
(c1) Verbindungen nach Formel (II)
M-Q (II)
worin M einen organischen Rest mit einer zahlenmittleren Molmasse von maximal 1000 g/mol darstellt, welcher
I) mindestens eine tertiären Aminogruppe und mindestens eine Hydroxylgruppe oder
ii) mindestens eine hydrolisierbare Silangruppe unter der Maßgabe enthält, dass für 100 % der Verbindung der allgemeinen Formel (I) n = 1 gilt, und
Q für NH₂, OH oder NHR steht, worin R für eine lineare oder verzweigte Alkylgruppe mit 1 bis 18 Kohlenstoffatomen steht,
(c2) einem Blocklerungsmittel für isocyanatgruppen ausgewählt aus der Gruppe bestehend aus Lactamen, Malonestern, Alkyacetoacetaten, Phenolen, Diisopropylamin, 1,2,4-Trizol und Imidazol, und
(c3) optional Verbindungen der allgemeinen Formel (III)
Z-Q (III)
worin
Z für einen organischen basischen Rest mit mindestens einer tertiären Aminogruppe steht, der keine NCO-reaktiven Gruppen enthält, und
Q für NH₂, OH oder NHR steht, worin R für eine lineare oder verzweigte Alkylgruppe mit 1 bis 18 Kohlenstoffatomen steht,
wobei im Reaktionsprodukt aus (a), (b) und (c) gegebenenfalls vorliegende Hydroxylgruppen gegebenenfalls mit Polycarbonsäuren mit mindestens zwei Carboxylgruppen oder deren Anhydriden In einer solchen Menge umgesetzt werden, dass auf jede umzusetzende Hydroxylgruppe mindestens 0,8 Moleküle der Polycarbonsäure oder des Polycarbonsäureanhydrids eingesetzt werden;
unter der Maßgabe, dass mindestens 10 % der Isocyanatgruppen der Komponente (a) mit Komponente (c) umgesetzt werden und als Komponente (c) mindestens 5 mol% einer oder mehrere der Komponenten (c1) und/oder (c2) eingesetzt werden und dass 0 bis 50 % der Isocyanatgruppen der Komponente (a) mit einer oder mehreren Komponenten (c3) umgesetzt werden.

10. Verfahren zur Herstellung einer Additionsverbindung nach Anspruch 9, wobei zunächst Komponente (a) mit Komponente (b) zur Reaktion gebracht wird und anschließend eine Umsetzung mit Komponente (c) stattfindet.

11. Verfahren zur Herstellung einer Additionsverbindung nach einem der Ansprüche 9 oder 10, wobei Komponente (a) zunächst mit Verbindungen der allgemeinen Formel (I) für die n=1 gilt umgesetzt wird und anschließend mit Verbindungen der allgemeinen Formel (I) für die n=2 oder 3 gilt.

12. Verwendung einer der Additionsverbindungen aus einem oder mehreren der Ansprüche 1 bis 8 oder hergestellt nach einem oder mehreren der Verfahren gemäß Ansprüchen 9 bis 11, als Dispergiermittel, Dispersionsstabilisator und/oder Netzmittel.

13. Verwendung einer der Additionsverbindungen aus einem oder mehreren der Ansprüche 1 bis 8 oder hergestellt nach einem oder mehreren der Verfahren gemäß Ansprüchen 9 bis 11
• bei der Herstellung oder Verarbeitung von Lacken, Druckfarben, Tinten, Papierstrich, Leder- und Textilfarben, Pasten, Pigmentkonzentraten, Keramiken, kosmetischen Zubereitungen, Gießmassen und/oder Formmassen auf Basis von synthetischen, halbsynthetischen oder natürlichen makromolekularen Stoffen, oder
• zur Herstellung von Pigmente und/oder Füllstoffe enthaltenden Plgmantkonzentraten, Lacken, Pasten und/oder Formmassen, oder
• zur Beschichtung von pulverpartlkel- und/oder faserpartikelförmigen Feststoffen, oder
• zur Herstellung eines Pigmentlacks oder
• zur Herstellung eines pigmentierten Überzugs auf einem Substrat, wobei mit der Additionsverbindung ein Pigmentlack hergestellt wird, wobei der Pigmentlack auf das Substrat aufgebracht wird und wobei der auf das Substrat aufgebrachte Pigmentlack eingebrannt oder ausgehärtet bzw. vernetzt wird.

14. Verwendung einer Additionsverbindung aus einem oder mehreren der Ansprüche 1 bis 8 oder hergestellt nach einem oder mehreren der Verfahren gemäß Ansprüchen 9 bis 11 zur Beschichtung von pulverpartikel- und/oder faserpartikelförmigen Feststoffen, wobei die pulverpartikel- und/oder faserpartikelförmigen Feststoffe dispergierbare Pigmente und/oder Füllstoffe sind.

15. Pulverpartikel- und/oder faserpartikelförmige Feststoffe, **dadurch gekennzeichnet, dass** diese mit einer Additionsverbindung nach einem oder mehreren der Ansprüche 1 bis 8 oder hergestellt nach einem oder mehreren der Verfahren gemäß Ansprüchen 9 bis 11 beschichtet sind.

16. Pulverpartlkel- und/oder faserpartikelförmige Feststoffe nach Anspruch 15, wobei es sich bei den pulverpartikel- und/oder faserpartikelförmigen Feststoffen um Pigmente und/oder Füllstoffe handelt.

## Claims

1. Addition compounds and salts thereof, **characterized in that** the addition compounds are obtainable by reacting
(a) one or more polyisocyanates having at least two isocyanate groups per molecule with
(b) one or more compounds of the formula (I)
Y-(XH)ₙ (I)
where
XH is a group that is reactive towards isocyanates and
Y is a monomeric or polymeric group that is not reactive towards isocyanate, that contains no tertiary amino groups and no hydrolysable silane groups and that comprises one or more aliphatic, cycloaliphatic and/or aromatic groups,
and where
n is 1, 2 or 3,
the compound of the formula (I) possessing a number-average molar mass Mₙ of less than 20 000 g/mol and not representing a compound which falls within the definition of component (c2),
and
where for at least 50 mol% of the compounds of the formula (I) it is the case that n is 1,
with the proviso that 20% to 90% of the isocyanate groups of component (a) are reacted with the compounds of the formula (I),
and
(c) one or more compounds from the group consisting of
(c1) compounds of the formula (II)
M-Q (II)
in which
M is an organic radical having a number-average molar mass of not more than 1000 g/mol which contains
i) at least one tertiary amino group and at least one hydroxyl group
or
ii) at least one hydrolysable silane group with the proviso that for 100% of the compound of the general formula (I) n is 1, and
Q is NH₂, OH or NHR, in which R is a linear or branched alkyl group having 1 to 18 carbon atoms,
(c2) a blocking agent for isocyanate groups selected from the group consisting of lactams, malonic esters, alkyl acetoacetates, phenols, diisopropylamine, 1,2,4-triazole, and imidazole, and
(c3) optionally compounds of the general formula (III)
Z-Q (III)
in which
Z is an organic basic radical having at least one tertiary amino group and contains no NCO-reactive groups, and
Q is NH₂, OH or NHR, in which R is a linear or branched alkyl group having 1 to 18 carbon atoms,
where, if there are any hydroxyl groups present in the reaction product of (a), (b) and (c) are, if desired, reacted with polycarboxylic acids having at least two carboxyl groups or their anhydrides in an amount such that at least 0.8 molecule of the polycarboxylic acid or of the polycarboxylic anhydride is used for each hydroxyl group to be reacted;
subject to the proviso that at least 10% of the isocyanate groups of component (a) are reacted with component (c) and use is made as component (c) of at least 5 mol% of one or more of components (c1) and/or (c2), and that 0% to 50% of the isocyanate groups of component (a) are reacted with one or more components (c3).

2. Addition compounds according to Claim 1, where Y optionally contains the heteroatoms O, S, Si and/or N and/or ether, urethane, carbonate, amide, siloxane and/or ester groups, and optionally halogen is substituted for hydrogen.

3. Addition compounds according to Claim 1 or 2, where Z has one or more of the following definitions: A) an aliphatic and/or cycloaliphatic group having at least one tertiary amino group, or B) a heterocyclic group having at least one basic ring nitrogen atom that contains no hydrogen atom, it being possible for the heterocyclic group to be attached via an organic coupling group to the group Q.

4. Addition compounds according to one or more of Claims 1 to 3, where at least two different compounds of the formula (I) are used.

5. Addition compounds and salts thereof according to one or more of Claims 1 to 4, **characterized in that** the monofunctional compounds of the formula (I) are monohydroxy-functional polyethers, polyesters, polyether-polyesters and/or aliphatic and/or cycloaliphatic monoalcohols having 2 to 30 carbon atoms, some of whose hydrogen atoms may have been replaced by halogen and/or aryl radicals.

6. Addition compounds according to one or more of Claims 1 to 5, **characterized in that** polyfunctional compounds of the formula (I) used are di- or trihydroxy-functional polyethers, polyesters or polyether-polyesters.

7. Addition compounds according to one or more of Claims 1 to 6, **characterized in that** they contain no unsaturated groups.

8. Addition compounds according to one or more of Claims 1 to 7, **characterized in that** the polyisocyanates are trimerization products of diisocyanates based on hexamethylene diisocyanate, isophorone diisocyanate and/or tolylene diisocyanate.

9. Process for preparing the addition compounds according to one or more of Claims 1 to 8, which comprises reacting
(a) one or more polyisocyanates having at least two isocyanate groups per molecule with
(b) one or more compounds of the formula (I)
Y-(XH)ₙ (I)
where
XH is a group that is reactive towards isocyanates and
Y is a monomeric or polymeric group that is not reactive towards isocyanates, that contains no tertiary amino groups and no hydrolysable silane groups and that comprises one or more aliphatic, cycloaliphatic and/or aromatic groups,
and where
n is 1, 2 or 3,
the compound of the formula (I) possessing a number-average molar mass Mₙ of less than 20 000 g/mol and not representing a compound which falls within the definition of component (c2),
and
where for at least 50 mol% of the compounds of the formula (I) it is the case that n is 1,
with the proviso that 20% to 90% of the isocyanate groups of component (a) are reacted with the compounds of the formula (I),
and
(c) one or more compounds from the group consisting of
(cl) compounds of the formula (II)
M-Q (II)
in which M is an organic radical having a number-average molar mass of not more than 1000 g/mol which contains
i) at least one tertiary amino group and at least one hydroxyl group or
ii) at least one hydrolysable silane group with the proviso that for 100% of the compound of the general formula (I) n is 1, and
Q is NH₂, OH or NHR, in which R is a linear or branched alkyl group having 1 to 18 carbon atoms, (c2) a blocking agent for isocyanate groups selected from the group consisting of lactams, malonic esters, alkyl acetoacetates, phenols, diisopropylamine, 1,2,4-triazole, and imidazole, and (c3) optionally compounds of the general formula (III)
Z-Q (III)
in which
Z is an organic basic radical having at least one tertiary amino group and contains no NCO-reactive groups, and
Q is NH₂, OH or NHR, in which R is a linear or branched alkyl group having 1 to 18 carbon atoms,
where, if there are any hydroxyl groups present in the reaction product of (a), (b) and (c) are, if desired, reacted with polycarboxylic acids having at least two carboxyl groups or their anhydrides in an amount such that at least 0.8 molecule of the polycarboxylic acid or of the polycarboxylic anhydride is used for each hydroxyl group to be reacted;
subject to the proviso that at least 10% of the isocyanate groups of component (a) are reacted with component (c) and use is made as component (c) of at least 5 mol% of one or more of components (c1) and/or (c2), and that 0% to 50% of the isocyanate groups of component (a) are reacted with one or more components (c3) .

10. Process for preparing an addition compound according to Claim 9, where first component (a) is reacted with component (b) and then a reaction with component (c) takes place.

11. Process for preparing an addition compound according to either of Claims 9 and 10, where component (a) is reacted first with compounds of the general formula (I) where n is 1 and then with compounds of the general formula (I) where n is 2 or 3.

12. Use of one of the addition compounds from one or more of Claims 1 to 8 or prepared by one or more of the processes according to Claims 9 to 11 as a dispersant, dispersion stabilizer and/or wetting agent.

13. Use of one of the addition compounds from one or more of Claims 1 to 8 or prepared by one or more of the processes according to Claims 9 to 11
• in the preparation or processing of paints, inks, including printing inks, paper coatings, leather and textile colours, pastes, pigment concentrates, ceramics, cosmetic preparations, casting compositions and/or moulding compositions based on synthetic semisynthetic or natural macromolecular substances, or
• for preparing pigment- and/or filler-comprising pigment concentrates, paints, pastes and/or moulding compositions, or
• for coating solids in powder particle and/or fibre particle form, or
• for preparing a pigmented paint, or
• for producing a pigmented coating on a substrate, the addition compound being used to prepare a pigmented paint, the pigmented paint being applied to the substrate, and the pigmented paint applied to the substrate being baked or cured or crosslinked.

14. Use of one of the addition compounds from one or more of Claims 1 to 8 or prepared by one or more of the processes according to Claims 9 to 11 for coating solids in powder particle and/or fibre particle form, the solids in powder particle and/or fibre particle form being dispersible pigments and/or fillers.

15. Solids in powder particle and/or fibre particle form, **characterized in that** they are coated with an addition compound according to one or more of Claims 1 to 8, or prepared by one or more of the processes according to Claims 9 to 11.

16. Solids in powder particle and/or fibre particle form according to Claim 15, the solids in powder particle and/or fibre particle form being pigments and/or fillers.

## Revendications

1. Composés d'addition et leurs sels, **caractérisés en ce que** les composés d'addition peuvent être obtenus en faisant réagir
(a) un ou plusieurs polyisocyanates présentant au moins deux groupes d'isocyanate par molecule avec
(b) un ou plusieurs composés de la formule (I)
Y-(XH)ₙ (I)
où
XH représente un groupe réactif aux isocyanates, et
Y représente un group monomérique ou polymérique non-réactif aux isocyanates qui ne contient pas des groupes d'amine tertiaire et pas des groupes silane hydrolysables, et qui comprend un ou plusieurs groupes aliphatiques, cycloaliphatiques et/ou aromatiques, et où
n représente 1, 2 ou 3,
le composé de la formule (I) ayant une masse molaire moyenne en nombre Mₙ inférieure à 20000 g/mol et n'étant pas de composé selon la définition du composant (c2),
et
n = pour au moins 50 % en mole des composés de la formule (I),
à condition que 20 % à 90 % des groupes isocyanate du composant (a) sont réagis avec les composés de la formule (I),
et
(c) un ou plusieurs composés du groupe consistant en
(c1) composés selon la formule (II)
M-Q (II)
où M représente un groupement organique avec une masse molaire moyenne en nombre de 1000 g/mol au maximum, qui contient
I) au moins un groupe d'amine tertiaire et au moins un groupe hydroxyle
ou
II) au moins un groupe silane hydrolysable à condition que n = 1 pour 100 % du composé de la formule générale (I), et
Q représente NH₂, OH ou NHR, où R représente un groupe alkyle linéaire ou ramifié avec 1 à 18 atomes de carbone,
(c2) un agent de blocage de groupes isocyanate, choisi dans le group consistant en lactames, esters maloniques, alkylacétoacétates, phénols, diisopropylamine, 1,2,4-trizole et imidazole, et
(c3) optionnellement composés de la formule générale (III)
Z-Q (III)
où
Z représente un groupement organique basique avec au moins un groupe d'amine tertiaire qui ne contient pas des groupes réactifs avec NCO, et Q représente NH₂, OH ou NHR, où R représente un groupe alkyle linéaire ou ramifié avec 1 à 18 atomes de carbone,
des groupes hydroxyle le cas échéant présents dans le produit de réaction de (a), (b) et (c) étant réagis, le cas échéant, avec des acides polycarboxyliques présentant au moins deux groupes carboxyle, ou leurs anhydrides, en une quantité tant qu'au moins 0,8 molécules d'acide polycarboxylique ou d'anhydride d'acide polycarboxylique sont utilisés pour chaque groupe hydroxyle à réagir ; à condition qu'au moins 10 % des groupes isocyanate du composant (a) sont réagis avec composant (c), et qu'au moins 5 % en mole d'un ou plusieurs des composants (c1) ou (c2) sont utilisés en tant que composant (c), et que 0 à 50 % des groupes isocyanate du composant (a) sont réagis avec un ou plusieurs composants (c3).

2. Composés d'addition selon la revendication 1, dans lesquels Y contient, le cas échéant, les hétéroatomes O, S, Si et/ou N et/ou des groupes éther, uréthane, carboxyle, amide, siloxane et/ou ester, et l'hydrogène est substitué, le cas échéant, par des halogènes.

3. Composés d'addition selon la revendication 1 ou 2, dans lesquels Z a l'une ou plusieurs des significations suivantes : A) un groupe aliphatique et/ou cycloaliphatique avec au moins un groupe d'amine tertiaire ou B) un groupe hétérocyclique avec au moins un atome d'azote intracyclique basique qui ne comprend aucun atome d'hydrogène, le groupe hétérocyclique pouvant être lié au groupe Q par l'intermédiaire d'un groupe de couplage organique.

4. Composés d'addition selon une ou plusieurs des revendications 1 à 3, dans lesquels au moins deux composés différents de la formule générale (I) sont utilisés.

5. Composés d'addition et leurs sels selon une ou plusieurs des revendications 1 à 4, **caractérisés en ce que** les composés monofonctionnels de la formule (I) sont des polyéthers, polyesters ou polyéther-polyesters monohydroxyfonctionnels ot/ou des monoalcools aliphatiques et/ou cycloaliphatiques avec 2 à 30 atomes de carbone, dont les atomes de hydrogène peuvent être substitués en partie par des halogènes et/ou des groupements aryle.

6. Composés d'addition selon une ou plusieurs des revendications 1 à 5, **caractérisés en ce que** des polyéthers, polyesters ou polyéther-polyesters dihydroxyfonctionnels ou trihydroxyfonctionnels sont utilisés en tant que composés polyfonctionnels de la formule (I).

7. Composés d'addition selon une ou plusieurs des revendications 1 à 6, **caractérisés en ce qu'**ils ne contiennent pas des groupes insaturés.

8. Composés d'addition selon une ou plusieurs des revendications 1 à 7, **caractérisés en ce que** les polyisocyanates sont des produits de trimérisation des diisocyanates à base de diisocyanate d'hexaméthylène, diisocyanate d'isophorone et/ou diisocyanate de toluylène.

9. Procédé pour la fabrication des composés d'addition selon une ou plusieurs des revendications 1 à 8, dans lequel on fait réagir
(a) un ou plusieurs polyisocyanates présentant au moins deux groupes d'isocyanate par molécule avec
(b) un ou plusieurs composés de la formule (I)
Y-(XH)ₙ (I)
où
XH représente un groupe réactif aux isocyanates, et
Y représente un group monomérique ou polymérique non-réactif aux isocyanates qui ne contient pas des groupes d'amine tertiaire et pas des groupes silane hydrolysables, et qui comprend un ou plusieurs groupes aliphatiques, cycloallphatiques et/ou aromatiques, et où
n représente 1, 2 ou 3,
le composé de la formule (I) ayant une masse molaire moyenne en nombre Mₙ inférieure à 20000 g/mol et n'étant pas de composé selon la définition du composant (c2),
et
n = 1 pour au moins 50 % en mole des composés de la formule (I),
à condition que 20 % à 90 % des groupes isocyanate du composant (a) sont réagis avec les composés de la formule (I),
et
(c) un ou plusieurs composés du groupe consistant en
(c1) composés selon la formule (II)
M-Q (II)
où
M représente un groupement organique avec une masse molaire moyenne en nombre de 1000 g/mol au maximum, qui contient
I) au moins un groupe d'amine tertiaire et au moins un groupe hydroxyle
ou
II) au moins un groupe silane hydrolysable à condition que n = 1 pour 100 % du composé de la formule générale (I), et
Q représente NH₂, OH ou NHR, où R représente un groupe alkyle linéaire ou ramifié avec 1 à 18 atomes de carbone,
(c2) un agent de blocage de groupes isocyanate, choisi dans le group consistant en lactames, esters maloniques, alkylacétoacétates, phénols, diisopropylamine, 1,2,4-trizole et imidazole, et
(c3) optionnellement composés de la formule générale (III)
Z-Q (III)
où
Z représente un groupement organique basique avec au moins un groupe d'amine tertiaire qui ne contient pas des groupes réactifs avec NCO, et Q représente NHR₂, OH ou NHR, où R représente un groupe alkyle linéaire ou ramifié avec 1 à 18 atomes de carbone,
des groupes hydroxyle le cas échéant présents dans le produit de réaction de (a), (b) et (c) étant réagis, le cas échéant, avec des acides polycarboxyliques présentant au moins deux groupes carboxyle, ou leurs anhydrides, en une quantité tant qu'au moins 0,8 molécules d'acide polycarboxylique ou d'anhydride d'acide polycarboxylique sont utilisés pour chaque groupe hydroxyle à réagir ;
à condition qu'au moins 10 % des groupes isocyanate du composant (a) sont réagis avec composant (c), et qu'au moins 5 % en mole d'un ou plusieurs des composants (c1) ou (c2) sont utilisés en tant que composant (c), et que 0 à 50 % des groupes isocyanate du composant (a) sont réagis avec un ou plusieurs composants (c3).

10. Procédé pour la fabrication d'un composé d'addition selon la revendication 9, dans lequel premièrement le composant (a) est réagi avec le composant (b) et ensuite s'effectue la réaction avec le composant (c).

11. Procédé pour la fabrication d'un composé d'addition selon l'une quelconque des revendications 9 ou 10, dans lequel premièrement le composant (a) est réagi avec des composés de la formule générale (I) avec n = 1, et ensuite avec des composés de la formule générale (I) avec n = 2 ou 3.

12. Utilisation d'un des composés d'addition d'une ou plusieurs des revendications 1 à 8 ou fabriqués selon un ou plusieurs des procédés selon les revendications 9 à 11 en tant qu'agents de dispersion, stabilisants de dispersion et/ou agents mouillants.

13. Utilisation d'un des composés d'addition d'une ou plusieurs des revendications 1 à 8 ou fabriqués selon un ou plusieurs des procédés selon les revendications 9 à 11
- dans la fabrication ou le traitement des vernis, couleurs d'imprimerie, encres, couchage du papier, teintures de cuir et textiles, pâtes, concentrés de pigments, céramiques, préparations cosmétiques, masses de coulée et/ou masses de moulage à base des matières synthétiques, matières semi-synthétiques ou matières macromoléculaires naturelles, ou
- pour la fabrication des concentrés de pigments, vernis et peintures, pâtes et/ou masses de moulage contenant des pigments et/ou matériaux de remplissage, ou
- pour le revêtement des matières solides sous forme de particules pulvérulentes et/ou de particules fibreuses, ou
- pour la fabrication d'un vernis à pigments ou
- pour la fabrication d'un revêtement pigmenté sur un substrat, dans laquelle un vernis à pigments est fabriqué avec le composé d'addition, le vernis à pigments étant appliqué sur le substrat et le vernis à pigments appliqué sur le substrat étant recuit ou durci ou réticulé.

14. Utilisation d'un des composés d'addition d'une ou plusieurs des revendications 1 à 8 ou fabriqués selon un ou plusieurs des procédés selon les revendications 9 à 11, pour le revêtement des matières solides sous forme de particules pulvérulentes et/ou de particules fibreuses, les matières solides sous forme de particules pulvérulentes et/ou de particules fibreuses étant des pigments et/ou des matériaux de remplissage dispersables.

15. Matières solides sous forme de particules pulvérulentes et/ou de particules fibreuses, **caractérisées en ce qu'**elles sont fabriquées avec un composé d'addition selon une ou plusieurs des revendications 1 à 8 ou revêtues selon un ou plusieurs procédés selon les revendications 9 à 11.

16. Matières solides sous forme de particules pulvérulentes et/ou de particules fibreuses selon la revendication 15, les matières solides sous forme de particules pulvérulentes et/ou de particules fibreuses étant des pigments et/ou des matériaux de remplissage dispersables.
